(19) **Europäisches Patentamt / European Patent Office / Office européen des brevets**

(11) **EP 4 645 566 A1**

(12) **EUROPEAN PATENT APPLICATION**
published in accordance with Art. 153(4) EPC

(43) Date of publication:
**05.11.2025 Bulletin 2025/45**

(21) Application number: **23897178.2**

(22) Date of filing: **31.08.2023**

(51) International Patent Classification (IPC):
**H01M 50/403** (2021.01)   **H01M 4/13** (2010.01)
**H01M 4/139** (2010.01)   **H01M 50/411** (2021.01)
**H01M 50/414** (2021.01)   **H01M 50/443** (2021.01)
**H01M 50/449** (2021.01)   **H01M 50/463** (2021.01)
**H01M 50/489** (2021.01)

(52) Cooperative Patent Classification (CPC):
**H01M 4/13; H01M 4/139; H01M 50/403;
H01M 50/411; H01M 50/414; H01M 50/443;
H01M 50/449; H01M 50/463; H01M 50/489;
Y02E 60/10**

(86) International application number:
**PCT/JP2023/032014**

(87) International publication number:
**WO 2024/116518 (06.06.2024 Gazette 2024/23)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.11.2022 JP 2022192182**

(71) Applicant: **Zeon Corporation
Tokyo 100-8246 (JP)**

(72) Inventors:
• **TSUCHIKAWA Tomoya**
**Tokyo 100-8246 (JP)**
• **TAKAGI Kazuki**
**Tokyo 100-8246 (JP)**
• **UMESATO Toshiyuki**
**Tokyo 100-8246 (JP)**

(74) Representative: **Maiwald GmbH
Elisenhof
Elisenstraße 3
80335 München (DE)**

(54) **COMPOSITION FOR NONAQUEOUS SECONDARY BATTERY FUNCTIONAL LAYER, MEMBER FOR NONAQUEOUS SECONDARY BATTERY, METHOD FOR MANUFACTURING MEMBER FOR NONAQUEOUS SECONDARY BATTERY, AND NONAQUEOUS SECONDARY BATTERY**

(57) A composition for a non-aqueous secondary battery functional layer has a surface tension $S^{30}$ at 30°C and a surface tension $S^{50}$ at 50°C that satisfy condition (1) $(S^{30} - S^{50}) < 5$ mN/m and condition (2) 30 mN/m $\leq S^{30} \leq 50$ mN/m, and has a viscosity at 30°C of not less than 1 mPa·s and not more than 50 mPa·s.

**EP 4 645 566 A1**

**Description**

TECHNICAL FIELD

The present disclosure relates to a composition for a non-aqueous secondary battery functional layer, a member for a non-aqueous secondary battery and method of producing the same, and a non-aqueous secondary battery.

BACKGROUND

Non-aqueous secondary batteries (hereinafter, also referred to as "secondary batteries") such as lithium ion secondary batteries have characteristics such as compact size, light weight, high energy density, and the ability to be repeatedly charged and discharged, and are used in a wide variety of applications. A secondary battery generally includes battery members such as a positive electrode, a negative electrode, and a separator that isolates the positive electrode and the negative electrode from each other and prevents short-circuiting between the positive and negative electrodes.

Constituent members that include a porous membrane layer for improving heat resistance and strength, an adhesive layer for adhering battery members to each other, or the like (hereinafter, such layers are referred to collectively as "functional layers") are used in non-aqueous secondary batteries such as lithium ion secondary batteries. Specifically, electrodes that further include a functional layer formed on an electrode substrate in which an electrode mixed material layer is provided on a current collector and separators that include a functional layer formed on a separator substrate are used as battery members. In recent years, further improvements have been studied in relation to the chemical compositions, production methods, and so forth of functional layers with the aim of further increasing the performance of non-aqueous secondary batteries such as lithium ion secondary batteries.

The formation of a functional layer through ejection of fine droplets of a composition for a functional layer from a nozzle by an inkjet method has also been studied in recent years. For example, Patent Literature (PTL) 1 proposes a composition for a non-aqueous secondary battery adhesive layer with which, in a situation in which a separator made of polyethylene and an adhesive layer for a non-aqueous secondary battery obtained from the composition for a non-aqueous secondary battery adhesive layer are pressure bonded under specific conditions with different pressures, the degree of change of adhesive strength (pressure sensitivity) satisfies a specific relationship. As another example, PTL 2 discloses a technique in which an inkjet method is adopted for the application of a slurry that contains a particulate polymer having a specific core-shell structure, a polyhydric alcohol compound, and water and in which a content ratio of the polyhydric alcohol compound relative to the particulate polymer is within a specific range. As yet another example, PTL 3 discloses a technique relating to a method of applying an adhesive onto a separator for a fuel cell in which an adhesive solution is applied onto the surface of a separator by an inkjet method using an ultrafine inkjet apparatus.

CITATION LIST

Patent Literature

PTL 1: WO2022/209997A1
PTL 2: WO2019/221056A1
PTL 3: JP2005-5012A

SUMMARY

(Technical Problem)

In the conventional techniques described above, there is still room for improvement in terms of ensuring inkjet ejection characteristics while also causing strong adhesion of battery members to each other through warm pressing and imparting excellent battery characteristics to a secondary battery.

Accordingly, one object of the present disclosure is to provide a composition for a non-aqueous secondary battery functional layer that can ensure inkjet ejection characteristics while also providing a functional layer for a non-aqueous secondary battery having excellent adhesiveness and causing a non-aqueous secondary battery to display excellent battery characteristics.

Another object of the present disclosure is to provide a member for a non-aqueous secondary battery that has excellent adhesiveness and can cause a non-aqueous secondary battery to display excellent electrical characteristics, and also to provide a method of producing this member for a non-aqueous secondary battery.

Yet another object of the present disclosure is to provide a non-aqueous secondary battery that has excellent electrical characteristics.

(Solution to Problem)

The inventors conducted diligent investigation with the aim of solving the problems described above. The inventors made a new discovery that with regards to a composition for a non-aqueous secondary battery functional layer that is used in an inkjet method, in a case in which the difference between the surface tension at 30°C, which can be a temperature corresponding to an application temperature in inkjet coating, and the surface tension at 50°C, which can be a temperature corresponding to a drying temperature of a coating material obtained through application, is not more than a specific value and in which the viscosity at 30°C is within a specific range, it is possible to ensure inkjet ejection characteristics while also providing a functional layer for a non-aqueous secondary battery having excellent adhesiveness and causing a non-aqueous secondary battery to display excellent battery characteristics. In this manner, the inventors completed the present disclosure.

Specifically, with the aim of advantageously solving the problems set forth above, a presently disclosed composition for a non-aqueous secondary battery functional layer [1] has a surface tension $S^{30}$ at 30°C and a surface tension $S^{50}$ at 50°C that satisfy conditions (1) and (2) set forth below:

$$(S^{30} - S^{50}) < 5 \text{ mN/m} \cdots (1)$$

$$30 \text{ mN/m} \leq S^{30} \leq 50 \text{ mN/m} \cdots (2)$$

and has a viscosity at 30°C of not less than 1 mPa·s and not more than 50 mPa·s.

By using a composition for a non-aqueous secondary battery functional layer such as set forth above, it is possible to ensure inkjet ejection characteristics while also providing a functional layer for a non-aqueous secondary battery having excellent adhesiveness and causing a non-aqueous secondary battery to display excellent battery characteristics.

Note that the surface tension and the viscosity of a composition for a functional layer can be measured by methods described in the EXAMPLES section of the present specification.

[2] The composition for a non-aqueous secondary battery functional layer according to the foregoing [1] preferably has a viscosity at 30°C of not less than 5 mPa·s and not more than 30 mPa·s. When the viscosity is within the range set forth above, adhesiveness of an obtained functional layer can be increased, lithium deposition on an electrode surface during use of an obtained non-aqueous secondary battery can be inhibited, and increased resistance upon repeated use of the non-aqueous secondary battery can be suppressed.

[3] The composition for a non-aqueous secondary battery functional layer according to the foregoing [1] or [2] preferably comprises a non-ionic surfactant.

When the composition for a non-aqueous secondary battery functional layer contains a non-ionic surfactant, battery members can be even more strongly adhered to each other, and battery characteristics of an obtained secondary battery can be even further enhanced.

[4] The composition for a non-aqueous secondary battery functional layer according to any one of the foregoing [1] to [3] preferably further comprises a viscosity modifier. When the composition for a non-aqueous secondary battery functional layer further contains a viscosity modifier, adhesiveness of an obtained functional layer can be increased.

[5] The composition for a non-aqueous secondary battery functional layer according to any one of the foregoing [1] to [4] preferably comprises a particulate polymer having a core-shell structure as adhesive particles.

When the composition for a non-aqueous secondary battery functional layer contains a particulate polymer having a core-shell structure as adhesive particles, battery members can be even more strongly adhered to each other.

[6] In the composition for a non-aqueous secondary battery functional layer according to the foregoing [5], the particulate polymer having a core-shell structure as the adhesive particles preferably has at least one glass-transition temperature that is lower than 80°C.

When the particulate polymer having a core-shell structure as the adhesive particles has at least one glass-transition temperature that is lower than 80°C, battery members can be even more strongly adhered to each other.

Note that the glass-transition temperature of adhesive particles can be measured according to a method described in the EXAMPLES section of the present specification.

[7] In the composition for a non-aqueous secondary battery functional layer according to the foregoing [5] or [6], the particulate polymer having a core-shell structure as the adhesive particles preferably has a volume-average particle diameter of not less than 100 nm and not more than 1,000 nm.

When the particulate polymer having a core-shell structure as the adhesive particles has a volume-average particle diameter of not less than 100 nm and not more than 1,000 nm, battery members can be even more strongly adhered to each other.

Note that the "volume-average particle diameter" represents the particle diameter at which, in a particle diameter distribution by volume measured by laser diffraction, cumulative volume calculated from a small diameter end of the distribution reaches 50%, and can be measured by a measurement method described in the EXAMPLES section of the present specification.

Moreover, with the aim of advantageously solving the problems set forth above, a presently disclosed method of producing a member for a non-aqueous secondary battery [8] comprises ejecting the composition for a functional layer according to any one of the foregoing [1] to [7] onto a substrate by an inkjet method to form a coating layer, wherein the substrate is an electrode or a separator.

By providing a coating layer that is an inkjet coating material of the presently disclosed composition for a functional layer set forth above on a substrate, it is possible to produce a member for a non-aqueous secondary battery that has excellent adhesiveness and that can cause a non-aqueous secondary battery to display excellent electrical characteristics.

Furthermore, with the aim of advantageously solving the problems set forth above, a presently disclosed member for a non-aqueous secondary battery [9] is a member in which a functional layer that is formed from the composition for a functional layer according to any one of the foregoing [1] to [7] is disposed on a substrate, wherein the functional layer has a dotted pattern with a dot size of not less than 10 $\mu$m and not more than 1,000 $\mu$m, and the substrate is an electrode or a separator.

The member for a non-aqueous secondary battery set forth above has excellent adhesiveness and can cause a non-aqueous secondary battery to display excellent electrical characteristics.

Also, a presently disclosed member for a non-aqueous secondary battery [10] is a member in which a functional layer that is formed from the composition for a functional layer according to any one of the foregoing [1] to [7] is disposed on a substrate, wherein the substrate is an electrode or a separator, and a penetration rate of the composition for a functional layer in a situation in which the composition for a functional layer is applied onto the substrate by an inkjet method is 0.4 nL/s or less. The member for a non-aqueous secondary battery set forth above has excellent adhesiveness and can cause a non-aqueous secondary battery to display excellent electrical characteristics.

Moreover, with the aim of advantageously solving the problems set forth above, a presently disclosed non-aqueous secondary battery comprises the member for a non-aqueous secondary battery according to the foregoing [9] or [10]. The non-aqueous secondary battery set forth above can display excellent electrical characteristics.

(Advantageous Effect)

According to the present disclosure, it is possible to provide a composition for a non-aqueous secondary battery functional layer that can ensure inkjet ejection characteristics while also providing a functional layer for a non-aqueous secondary battery having excellent adhesiveness and causing a non-aqueous secondary battery to display excellent battery characteristics.

Moreover, according to the present disclosure, it is possible to provide a member for a non-aqueous secondary battery that has excellent adhesiveness and can cause a non-aqueous secondary battery to display excellent electrical characteristics, and also to provide a method of producing this member for a non-aqueous secondary battery.

Furthermore, according to the present disclosure, it is possible to provide a non-aqueous secondary battery that has excellent electrical characteristics.

BRIEF DESCRIPTION OF THE DRAWINGS

In the accompanying drawings:

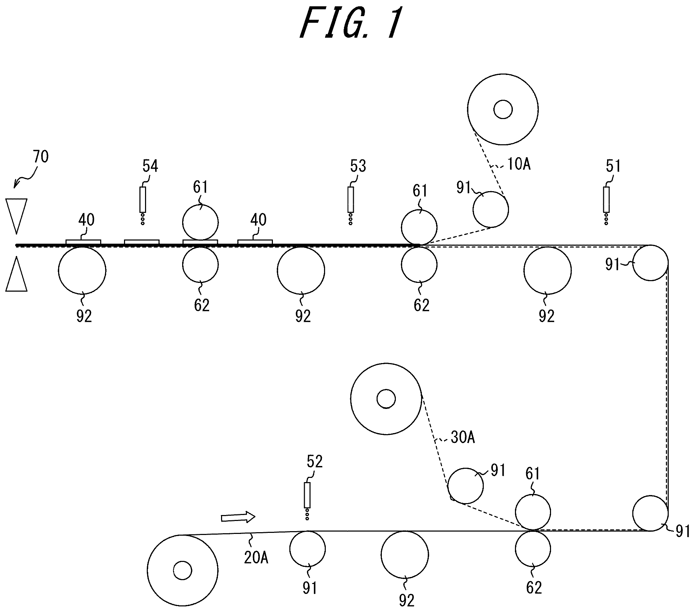

FIG. 1 is an explanatory diagram illustrating a production process of a laminate for a non-aqueous secondary battery in examples and comparative examples.

DETAILED DESCRIPTION

The following provides a detailed description of embodiments of the present disclosure.

The presently disclosed composition for a non-aqueous secondary battery functional layer can be used in formation of a functional layer for a non-aqueous secondary battery that is included in the presently disclosed member for a non-aqueous secondary battery. The presently disclosed member for a non-aqueous secondary battery includes a functional layer that has been formed using the presently disclosed composition for a non-aqueous secondary battery functional layer. Moreover, the presently disclosed non-aqueous secondary battery includes the presently disclosed member for a non-aqueous secondary battery. The presently disclosed composition for a functional layer can form a functional layer that is a layer capable of displaying a function corresponding to a functional component compounded therein. For example, in a case in which the functional component is an adhesive component such as adhesive particles, the functional layer can be an adhesive layer. Alternatively, in a case in which the functional component is a heat-resistant component such as heat-resistant particles, for example, the functional layer can be a heat-resistant layer. Further alternatively, in a case in which the functional component is an electrode active material, the functional layer can be an electrode mixed material layer. In particular, it is preferable that the presently disclosed composition for a functional layer is a composition for an adhesive layer.

(Composition for non-aqueous secondary battery functional layer)

Features of the presently disclosed composition for a non-aqueous secondary battery functional layer are that the presently disclosed composition for a non-aqueous secondary battery functional layer has a surface tension $S^{30}$ at 30°C and a surface tension $S^{50}$ at 50°C that satisfy conditions (1) and (2) set forth below and also has a viscosity at 30°C of not less than 1 mPa·s and not more than 50 mPa·s.

$$(S^{30} - S^{50}) < 5 \text{ mN/m} \cdots (1)$$

$$30 \text{ mN/m} \leq S^{30} \leq 50 \text{ mN/m} \cdots (2)$$

The presently disclosed composition for a non-aqueous secondary battery functional layer set forth above can ensure inkjet ejection characteristics while also causing good adhesion of battery members to each other. In particular, the presently disclosed composition for a functional layer can cause strong adhesion of battery members to each other even when applied with a small area density, which makes it possible to suppress an increase of internal resistance of an obtained secondary battery and to effectively enhance output characteristics of the secondary battery. Moreover, since a non-aqueous secondary battery that includes a member for a non-aqueous secondary battery having a functional layer that has been formed using the presently disclosed composition for a non-aqueous secondary battery functional layer experiences little deterioration of adhesive strength of the functional layer in accompaniment to repeated use, there is also a benefit in terms that an increase of resistance accompanying repeated use is small.

<Surface tension of composition for non-aqueous secondary battery functional layer>

With regards to the surface tension of the composition for a non-aqueous secondary battery functional layer, the surface tension $S^{30}$ at 30°C and the surface tension $S^{50}$ at 50°C are required to satisfy conditions (1) and (2) set forth below as previously described.

$$(S^{30} - S^{50}) < 5 \text{ mN/m} \cdots (1)$$

$$30 \text{ mN/m} \leq S^{30} \leq 50 \text{ mN/m} \cdots (2)$$

In addition, the viscosity at 30°C of the composition for a non-aqueous secondary battery functional layer is required to be not less than 1 mPa·s and not more than 50 mPa·s.

<<Value of $S^{30}$ - $S^{50}$>>

The value of the surface tension difference $S^{30}$ - $S^{50}$ is the difference between the surface tension at 30°C, which can be a temperature corresponding to an application temperature in inkjet coating, and the surface tension at 50°C, which can be a temperature corresponding to a drying temperature of a coating material obtained through application. The value of $S^{30}$ - $S^{50}$ is required to be 5 mN/m or less, and is preferably 4 mN/m or less. Moreover, the lower limit for the value of $S^{30}$ - $S^{50}$ is not specifically limited, but is normally more than 0 mN/m. When the value of $S^{30}$ - $S^{50}$ is not more than any of the upper limits set forth above, components that are contained in the composition for a functional layer can be effectively inhibited from segregating in an obtained functional layer, which makes it possible to increase adhesiveness that can be displayed by the functional layer. Although the reason for this is not clear, when the value of $S^{30}$ - $S^{50}$ is not more than any of the upper limits set forth above, this means that the surface tension has low temperature dependence, which is presumed to suppress convection that can arise in the composition for a functional layer in a period from application of the composition onto a substrate until drying thereof and make components that are contained in the composition for a functional layer unlikely to undergo segregation.

<<Surface tension at 30°C ($S^{30}$)>>

The surface tension ($S^{30}$) at 30°C of the composition for a non-aqueous secondary battery functional layer is required to be not less than 30 mN/m and not more than 50 mN/m. Moreover, the surface tension ($S^{30}$) is preferably 35 mN/m or more, and more preferably 37 mN/m or more, and is preferably 47 mN/m or less, more preferably 45 mN/m or less, and even more preferably 41 mN/m or less. When the surface tension is within any of the ranges set forth above, this enables good implementation of inkjet coating. In particular, when the value of the surface tension ($S^{30}$) at 30°C is not more than any of the upper limits set forth above, adhesiveness of an obtained functional layer can be increased, reduction of adhesiveness in accompaniment to repeated charging and discharging of an obtained secondary battery can be inhibited, and increased resistance in a cycling test can be suppressed.

<Viscosity at 30°C of composition for non-aqueous secondary battery functional layer>

The viscosity at 30°C of the composition for a non-aqueous secondary battery functional layer is required to be not less than 1 mPa·s and not more than 50 mPa·s. Moreover, the viscosity at 30°C of the composition for a non-aqueous secondary battery functional layer is preferably 40 mPa·s or less, more preferably 30 mPa·s or less, even more preferably 20 mPa·s or less, and particularly preferably 15 mPa·s or less, and is preferably 5 mPa·s or more, and more preferably 9 mPa·s or more. When the viscosity at 30°C of the composition for a non-aqueous secondary battery functional layer is within any of the ranges set forth above, this enables efficient implementation of inkjet coating. More specifically, when the viscosity at 30°C of the composition for a non-aqueous secondary battery functional layer is not less than any of the lower limits set forth above, adhesiveness of an obtained functional layer can be increased. Moreover, when the viscosity at 30°C of the composition for a non-aqueous secondary battery functional layer is not more than any of the upper limits set forth above, lithium deposition on an electrode surface during use of an obtained non-aqueous secondary battery can be inhibited, and increased resistance upon repeated use of the non-aqueous secondary battery can be suppressed.

<Solid content concentration of composition for non-aqueous secondary battery functional layer>

The solid content concentration of the composition for a non-aqueous secondary battery functional layer is preferably 3.0 mass% or more, more preferably 4.5 mass% or more, and even more preferably 9.5 mass% or more, and is preferably 20.0 mass% or less, and more preferably 15.0 mass% or less. When the solid content concentration is not less than any of the lower limits set forth above, facilitation of convection during drying of the composition for a functional layer can be inhibited, excessively small coating section area can be avoided, and adhesiveness of an obtained functional layer can be increased. Moreover, when the solid content concentration is not more than any of the upper limits set forth above, this enables good implementation of inkjet coating.

In addition to satisfying the attributes set forth above, it is preferable that the composition for a non-aqueous secondary battery functional layer contains, as constituent components, a particulate polymer having a core-shell structure as adhesive particles, a non-ionic surfactant, and a solvent. The composition for a non-aqueous secondary battery functional layer is a slurry composition in which a particulate polymer is dispersed in a solvent such as water and can optionally contain other components besides those already mentioned.

<Particulate polymer having core-shell structure>

The particulate polymer having a core-shell structure is a particulate polymer that has a core-shell structure including a core portion and a shell portion covering an outer surface of the core portion. By using the particulate polymer having a core-shell structure, it is possible to even further increase adhesiveness of an obtained functional layer.

The shell portion may completely cover the outer surface of the core portion or may partially cover the outer surface of the core portion. In terms of external appearance, even in a situation in which the outer surface of the core portion appears to be completely covered by the shell portion, the shell portion is still considered to be a shell portion that partially covers the outer surface of the core portion so long as pores are formed that pass between inside and outside of the shell portion.

Note that the particulate polymer may include any constituent element other than the core portion and the shell portion described above so long as the expected effects are not significantly lost as a result. Specifically, the particulate polymer may, for example, include a portion inside of the core portion that is formed of a different polymer to the core portion. In one specific example, a residual seed particle may be present inside of the core portion in a situation in which seed particles are used in production of the particulate polymer by seeded polymerization. However, from a viewpoint of noticeably displaying the expected effects, it is preferable that the particulate polymer is composed of only the core portion and the shell portion.

[Core portion]

-Glass-transition temperature-

The glass-transition temperature of a polymer of the core portion of the particulate polymer is preferably -50°C or higher, more preferably -45°C or higher, and even more preferably -40°C or higher, and is preferably lower than 80°C, more preferably 10°C or lower, and even more preferably 0°C or lower. When the glass-transition temperature of the polymer of the core portion is not lower than any of the lower limits set forth above, inkjet ejection characteristics can be improved. On the other hand, when the glass-transition temperature of the polymer of the core portion is not higher than any of the upper limits set forth above, adhesiveness of an obtained functional layer can be even further increased.

Note that the glass-transition temperature of the polymer of the core portion can be adjusted by altering the types or proportions of monomers used to produce the polymer of the core portion, for example.

-Chemical composition-

Examples of monomers that can be used to produce the polymer of the core portion include vinyl chloride monomers such as vinyl chloride and vinylidene chloride; vinyl acetate monomers such as vinyl acetate; aromatic vinyl monomers such as styrene, $\alpha$-methylstyrene, styrene sulfonic acid, butoxystyrene, and vinylnaphthalene; vinyl amine monomers such as vinyl amine; vinyl amide monomers such as N-vinylformamide and N-vinylacetamide; non-fluorine-containing (meth)acrylic acid ester monomers such as methyl acrylate, ethyl acrylate, butyl acrylate, 2-ethylhexyl acrylate, methyl methacrylate, ethyl methacrylate, butyl methacrylate, and cyclohexyl methacrylate; (meth)acrylamide monomers such as acrylamide and methacrylamide; (meth)acrylonitrile monomers such as acrylonitrile and methacrylonitrile; fluorine-containing (meth)acrylic acid ester monomers such as 2-(perfluorohexyl)ethyl methacrylate and 2-(perfluorobutyl)ethyl acrylate; maleimide; and maleimide derivatives such as phenylmaleimide. One of these monomers may be used individually, or two or more of these monomers may be used in combination in a freely selected ratio.

Note that in the present disclosure, "(meth)acryl" is used to indicate "acryl" and/or "methacryl", and "(meth) acrylonitrile" is used to indicate "acrylonitrile" and/or "methacrylonitrile".

Of these monomers, it is preferable to use at least a (meth)acrylic acid ester monomer as a monomer used in production of the polymer of the core portion from a viewpoint of even further increasing adhesive strength displayed by a functional layer, more preferable to use a (meth)acrylic acid ester monomer and an aromatic vinyl monomer in combination or to use a (meth)acrylic acid ester monomer and a (meth)acrylonitrile monomer in combination, and particularly preferable to use a (meth)acrylic acid ester monomer and an aromatic vinyl monomer in combination. In other words, the polymer of the core portion preferably includes at least a (meth)acrylic acid ester monomer unit, more preferably includes a (meth)acrylic acid ester monomer unit and an aromatic vinyl monomer unit or a (meth)acrylonitrile monomer unit, and even more preferably includes a (meth)acrylic acid ester monomer unit and an aromatic vinyl monomer unit.

The phrase "includes a monomer unit" as used in the present disclosure means that "a polymer obtained with the monomer includes a repeating unit derived from the monomer".

Moreover, the term "(meth)acrylic acid ester monomer" as used in the present disclosure refers to a monofunctional (meth)acrylic acid ester monomer that includes only one group displaying polymerization reactivity.

From a viewpoint of even further increasing adhesive strength displayed by a functional layer, the proportion constituted by (meth)acrylic acid ester monomer units in the polymer of the core portion when all repeating units (all monomer units) included in the polymer of the core portion are taken to be 100 mass% is preferably 5 mass% or more, more preferably 10 mass% or more, and particularly preferably 20 mass% or more, and is preferably 80 mass% or less, and more preferably 70 mass% or less.

Moreover, in a case in which the polymer of the core portion includes a (meth)acrylic acid ester monomer unit and an aromatic vinyl monomer unit, from a viewpoint of even further increasing adhesive strength displayed by a functional layer, the proportion constituted by aromatic vinyl monomer units in the polymer of the core portion when all repeating units (all monomer units) included in the polymer of the core portion are taken to be 100 mass% is preferably 15 mass% or more, more preferably 20 mass% or more, and particularly preferably 25 mass% or more, and is preferably 95 mass% or less, more preferably 80 mass% or less, and particularly preferably 70 mass% or less.

The polymer of the core portion can also include an acid group-containing monomer unit. The acid group-containing monomer may be a monomer that includes an acid group such as a carboxy group-containing monomer, a sulfo group-containing monomer, or a phosphate group-containing monomer, for example.

The carboxy group-containing monomer may be a monocarboxylic acid, a dicarboxylic acid, or the like, for example. The monocarboxylic acid may be acrylic acid, methacrylic acid, crotonic acid, or the like, for example. The dicarboxylic acid may be maleic acid, fumaric acid, itaconic acid, or the like, for example.

The sulfo group-containing monomer may be vinyl sulfonic acid, methyl vinyl sulfonic acid, (meth)allyl sulfonic acid, (meth)acrylic acid 2-sulfoethyl, 2-acrylamido-2-methylpropane sulfonic acid, 3-allyloxy-2-hydroxypropane sulfonic acid, or the like, for example.

The phosphate group-containing monomer may be 2-(meth)acryloyloxyethyl phosphate, methyl-2-(meth)acryloyloxyethyl phosphate, ethyl-(meth)acryloyloxyethyl phosphate, or the like, for example.

Note that in the present disclosure, "(meth)allyl" is used to indicate "allyl" and/or "methallyl", and "(meth)acryloyl" is used to indicate "acryloyl" and/or "methacryloyl".

Of these examples, carboxy group-containing monomers are preferable as the acid group-containing monomer, of which, monocarboxylic acids are preferable, and (meth)acrylic acid is more preferable.

One acid group-containing monomer may be used individually, or two or more acid group-containing monomers may be used in combination in a freely selected ratio.

The proportion constituted by acid group-containing monomer units in the polymer of the core portion when all repeating units (all monomer units) included in the polymer of the core portion are taken to be 100 mass% is preferably 0.1 mass% or more, and more preferably 1 mass% or more, and is preferably 15 mass% or less, and more preferably 10 mass% or less. By keeping the proportion constituted by acid group-containing monomer units within any of the ranges set forth above, it is possible to increase dispersibility of the polymer of the core portion and facilitate formation of a shell portion partially covering the outer surface of the core portion with respect to the outer surface of the polymer of the core portion during production of the particulate polymer.

The polymer of the core portion preferably includes a cross-linkable monomer unit in addition to the monomer units described above. A cross-linkable monomer is a monomer that can form a cross-linked structure during or after polymerization through heating or irradiation with energy rays.

The cross-linkable monomer may, for example, be a polyfunctional monomer that includes two or more groups displaying polymerization reactivity in the monomer. Examples of such polyfunctional monomers include divinyl monomers such as divinylbenzene, 1,3-butadiene, isoprene, and allyl methacrylate; di(meth)acrylic acid ester monomers such as ethylene dimethacrylate, diethylene glycol dimethacrylate, ethylene glycol dimethacrylate, diethylene glycol diacrylate, and 1,3-butylene glycol diacrylate; tri(meth)acrylic acid ester monomers such as trimethylolpropane trimethacrylate and trimethylolpropane triacrylate; epoxy group-containing ethylenically unsaturated monomers such as allyl glycidyl ether and glycidyl methacrylate; and γ-methacryloxypropyltrimethoxysilane. Of these cross-linkable monomers, di(meth)acrylic acid ester monomers are more preferable. One of these cross-linkable monomers may be used individually, or two or more of these cross-linkable monomers may be used in combination in a freely selected ratio.

The proportion constituted by cross-linkable monomer units in the polymer of the core portion when all repeating units (all monomer units) included in the polymer of the core portion are taken to be 100 mass% is preferably 0.1 mass% or more, and is preferably 10 mass% or less, more preferably 5 mass% or less, and particularly preferably 3 mass% or less. By keeping the proportion constituted by cross-linkable monomer units within any of the ranges set forth above, it is possible to even further increase adhesive strength displayed by a functional layer.

[Shell portion]

-Glass-transition temperature-

The glass-transition temperature of a polymer of the shell portion of the particulate polymer is preferably 50°C or higher, and more preferably 53°C or higher, and is preferably 200°C or lower, more preferably 120°C or lower, and even more preferably 105°C or lower. When the glass-transition temperature of the polymer of the shell portion is not lower than any of the lower limits set forth above, inkjet ejection characteristics can be even further improved. On the other hand, when the glass-transition temperature of the polymer of the shell portion is not higher than any of the upper limits set forth above, suitable softening of the particulate polymer makes it possible to even further increase adhesive strength displayed by a functional layer.

The glass-transition temperature of the polymer of the shell portion can be adjusted by altering the types or proportions of monomers used to produce the polymer of the shell portion, for example.

Moreover, the glass-transition temperature of the polymer of the shell portion is preferably at least 25°C higher, and more preferably at least 50°C higher than the previously described glass-transition temperature of the polymer of the core portion from a viewpoint of retaining the shape of the particulate polymer inside of a non-aqueous secondary battery and suppressing an increase of resistance.

-Chemical composition-

Examples of monomers that can be used to produce the polymer of the shell portion include the same monomers as those given as examples of monomers that can be used to produce the polymer of the core portion. One of such monomers may be used individually, or two or more of such monomers may be used in combination in a freely selected ratio.

Of these monomers, it is preferable to use either or both of a (meth)acrylic acid ester monomer and an aromatic vinyl monomer as a monomer used in production of the polymer of the shell portion from a viewpoint of even further increasing adhesive strength displayed by a functional layer, and more preferable to use both a (meth)acrylic acid ester monomer and an aromatic vinyl monomer. In other words, the polymer of the shell portion preferably includes either or both of a (meth)acrylic acid ester monomer unit and an aromatic vinyl monomer unit, and more preferably includes both a (meth) acrylic acid ester monomer unit and an aromatic vinyl monomer unit.

Moreover, from a viewpoint of even further increasing adhesive strength displayed by a functional layer, the proportion constituted by (meth)acrylic acid ester monomer units in the polymer of the shell portion when all repeating units (all monomer units) included in the polymer of the shell portion are taken to be 100 mass% is preferably 10 mass% or more, more preferably 20 mass% or more, and even more preferably 32.5 mass% or more, and is preferably 90 mass% or less, and more preferably 85 mass% or less.

Furthermore, from a viewpoint of even further increasing adhesive strength displayed by a functional layer, the proportion constituted by aromatic vinyl monomer units in the polymer of the shell portion when all repeating units (all monomer units) included in the polymer of the shell portion are taken to be 100 mass% is preferably 50 mass% or more, and more preferably 65 mass% or more, and is preferably 99 mass% or less, and more preferably 95 mass% or less.

Besides a (meth)acrylic acid ester monomer unit and an aromatic vinyl monomer unit, the polymer of the shell portion can include an acid group-containing monomer unit. The acid group-containing monomer may be a monomer that includes an acid group such as a carboxy group-containing monomer, a sulfo group-containing monomer, or a phosphate group-containing monomer, for example. Specifically, examples of acid group-containing monomers that may be used include the same monomers as acid group-containing monomers that can be used in formation of the core portion.

Of these examples, carboxy group-containing monomers are preferable as the acid group-containing monomer, of which, monocarboxylic acids are more preferable, and (meth)acrylic acid is even more preferable.

One acid group-containing monomer may be used individually, or two or more acid group-containing monomers may be used in combination in a freely selected ratio.

The proportion constituted by acid group-containing monomer units in the polymer of the shell portion when all repeating units (all monomer units) included in the polymer of the shell portion are taken to be 100 mass% is preferably 0.1 mass% or more, more preferably 0.4 mass% or more, and even more preferably 0.7 mass% or more, and is preferably 15 mass% or less, more preferably 10 mass% or less, and even more preferably 5 mass% or less. By keeping the proportion constituted by acid group-containing monomer units within any of the ranges set forth above, it is possible to improve dispersibility of the particulate polymer and even further increase adhesive strength displayed by a functional layer.

The polymer of the shell portion may include a hydroxy group-containing monomer unit.

The proportion constituted by hydroxy group-containing monomer units in the polymer of the shell portion when all repeating units (all monomer units) included in the polymer of the shell portion are taken to be 100 mass% is preferably 0.1 mass% or more, more preferably 0.4 mass% or more, and even more preferably 0.7 mass% or more, and is preferably 15 mass% or less, more preferably 10 mass% or less, and even more preferably 5 mass% or less. By keeping the proportion constituted by hydroxy group-containing monomer units within any of the ranges set forth above, it is possible to improve dispersibility of the particulate polymer and even further increase adhesive strength displayed by a functional layer.

The polymer of the shell portion may also include a cross-linkable monomer unit. Examples of cross-linkable monomers that may be used include the same monomers as given as examples of cross-linkable monomers that can be used for the polymer of the core portion. Of these cross-linkable monomers, di(meth)acrylic acid ester monomers and allyl methacrylate are preferable. One cross-linkable monomer may be used individually, or two or more cross-linkable monomers may be used in combination in a freely selected ratio.

[Mass proportion of shell portion among total of core portion and shell portion]

The mass proportion of the shell portion among the total of the core portion and the shell portion in the particulate polymer having a core-shell structure is preferably 2 mass% or more, and is preferably 15 mass% or less, and more preferably 10 mass% or less. When the mass proportion of the shell portion is not less than the lower limit set forth above, inkjet ejection characteristics can be even further improved. Moreover, when the mass proportion of the shell portion is not more than any of the upper limits set forth above, adhesive strength displayed by a functional layer can be even further increased, and a secondary battery can be caused to display even better battery characteristics.

Note that the mass proportion of the shell portion among the total of the core portion and the shell portion is calculated from a subsequently described ratio of thicknesses of the core portion and the shell portion and the specific gravity of the particulate polymer.

[Volume-average particle diameter of particulate polymer having core-shell structure]

The volume-average particle diameter of the particulate polymer having a core-shell structure is preferably 100 nm or more, and more preferably 200 nm or more, and is preferably 1,500 nm or less, more preferably 900 nm or less, even more preferably 800 nm or less, and further preferably 700 nm or less. When the volume-average particle diameter of the particulate polymer having a core-shell structure is 100 nm or more, it is possible to inhibit deterioration of battery characteristics due to increased secondary battery resistance caused by blocking of paths for lithium ions in a substrate (electrode or separator). Moreover, when the volume-average particle diameter is 1,500 nm or less, it is possible to further inhibit nozzle clogging in a situation in which the composition for a non-aqueous secondary battery functional layer is applied by an inkjet method and to improve inkjet ejection characteristics.

[Ratio of average thickness of shell portion relative to volume-average particle diameter]

A ratio of the average thickness of the shell portion relative to the volume-average particle diameter of the particulate polymer having a core-shell structure is preferably 0.1% or more, and more preferably 0.5% or more, and is preferably 15% or less, and more preferably 10% or less. When the average thickness of the shell portion is not less than any of the lower limits set forth above, inkjet ejection characteristics can be even further improved. Moreover, when the average thickness of the shell portion is not more than any of the upper limits set forth above, adhesive strength displayed by a functional layer can be even further increased.

The average thickness of the shell portion of the particulate polymer having a core-shell structure can be determined through observation of cross-sectional structure of the particulate polymer having a core-shell structure using a transmission electron microscope (TEM). Specifically, the maximum thickness of the shell portion is measured in the cross-sectional structure of the particulate polymer using a TEM, and an average value for the maximum thickness of the shell portion in 20 or more arbitrarily selected particles of the particulate polymer is taken to be the average thickness of the shell portion. However, in a case in which the shell portion is formed of particles of a polymer and in which the particles of the polymer form the shell portion as a monolayer without the particles forming the shell portion overlapping with one another in a radial direction of a particle of the particulate polymer, the number-average particle diameter of the particles forming the shell portion is taken to be the average thickness of the shell portion.

[Production method of particulate polymer having core-shell structure]

The above-described particulate polymer having a core-shell structure can be produced, for example, by stepwise polymerization in which the ratio of monomers for the polymer of the core portion and monomers for the polymer of the shell portion is changed over time. Specifically, the particulate polymer can be produced by continuous, multi-step emulsion polymerization or multi-step suspension polymerization in which a polymer of a preceding step is sequentially covered by a polymer of a subsequent step.

The following describes one example of a case in which the above-described particulate polymer having a core-shell structure is obtained by multi-step emulsion polymerization.

In the polymerization, an anionic surfactant such as sodium dodecylbenzenesulfonate or sodium dodecyl sulfate, a non-ionic surfactant such as polyoxyethylene nonylphenyl ether or sorbitan monolaurate, or a cationic surfactant such as octadecylamine acetate, for example, can be used as an emulsifier in accordance with a standard method. Moreover, a peroxide such as t-butyl peroxy-2-ethylhexanoate, potassium persulfate, or cumene peroxide or an azo compound such as 2,2'-azobis(2-methyl-N-(2-hydroxyethyl)propionamide) or 2,2'-azobis(2-amidinopropane) hydrochloride, for example, can be used as a polymerization initiator.

The polymerization procedure involves first mixing monomers for forming the core portion and the emulsifier, and performing emulsion polymerization as one batch to obtain a particulate polymer that forms the core portion. The above-described particulate polymer having a core-shell structure can then be obtained by performing polymerization of monomers for forming the shell portion in the presence of the particulate polymer forming the core portion.

In this polymerization, it is preferable that the monomers for forming the polymer of the shell portion are supplied into the polymerization system continuously or divided into a plurality of portions in a situation in which a particulate polymer having the outer surface of a core portion partially covered by a shell portion is to be produced. As a result of the monomers for forming the polymer of the shell portion being supplied into the polymerization system in portions or continuously, the polymer forming the shell portion can be formed as particles that bond to the core portion such as to form a shell portion that partially covers the core portion.

<<Amount of particulate polymer having core-shell structure>>

The amount of the particulate polymer having a core-shell structure when the total mass of the composition for a functional layer is taken to be 100 mass% is preferably 3.0 mass% or more, and more preferably 5.0 mass% or more, and is preferably 20.0 mass% or less, and more preferably 15 mass% or less. When the amount of the particulate polymer having a core-shell structure is not less than any of the lower limits set forth above, adhesiveness of an obtained functional layer can be even further increased, reduction of adhesiveness in accompaniment to repeated charging and discharging of an obtained secondary battery can be inhibited, and increased resistance in a cycling test can be suppressed. Moreover, when the amount of the particulate polymer having a core-shell structure is not more than any of the upper limits set forth above, an increase of internal resistance of an obtained secondary battery can be suppressed, and output characteristics of the secondary battery can be enhanced.

<<Degree of swelling in electrolyte solution of particulate polymer having core-shell structure>>

Although no specific range is stipulated with regard to the degree of swelling in electrolyte solution (solution of $LiPF_6$ dissolved with a concentration of 1 mol/L in a mixed solvent of ethylene carbonate/diethyl carbonate = 3/7 (volume ratio)) of the particulate polymer having a core-shell structure (hereinafter, also referred to simply as the "degree of swelling"), it is preferable that the particulate polymer having a core-shell structure does not dissolve in electrolyte solution from a viewpoint of maintaining good battery characteristics. Note that for the same reason, it is also preferable that a particulate polymer not having a core-shell structure that is an optional component does not dissolve in electrolyte solution.
Also note that the degree of swelling in electrolyte solution of the particulate polymer can be measured by a method described in the EXAMPLES section of the present specification.

<<Non-ionic surfactant>>

The composition for a non-aqueous secondary battery functional layer preferably contains a non-ionic surfactant. When the composition for a functional layer contains a non-ionic surfactant, battery members can be even more strongly adhered to each other, and battery characteristics of an obtained secondary battery can be even further enhanced. Examples of the non-ionic surfactant include, but are not specifically limited to, compounds that include a polyalkylene oxide structure such as ethylene oxide-propylene oxide copolymers, polyoxyalkylene alkyl ethers, polyoxyalkylene alkyl phenyl ethers, polyethylene glycol fatty acid esters, and polyoxyethylene sorbitan fatty acid esters; sorbitan fatty acid esters; and glycerin fatty acid esters. In particular, it is preferable to use a compound having a polyalkylene oxide structure as the non-ionic surfactant from a viewpoint of increasing adhesiveness of an obtained functional layer and reducing internal resistance of an obtained non-aqueous secondary battery, and more preferable to use an ethylene oxide-propylene oxide copolymer or a polyoxyalkylene alkyl ether. Note that the term "polyalkylene oxide structure" as used in the present specification refers to a structure where an alkylene oxide unit such as an ethylene oxide unit or a propylene oxide unit is repeated at least twice.
The content of the non-ionic surfactant when the total mass of the composition for a functional layer is taken to be 100 mass% is preferably 0.01 mass% or more, and more preferably 0.03 mass% or more, and is preferably 1.0 mass% or less, more preferably 0.5 mass% or less, and even more preferably 0.2 mass% or less. When the content of the non-ionic surfactant is not less than any of the lower limits set forth above, adhesiveness of an obtained functional layer can be increased, and internal resistance of an obtained non-aqueous secondary battery can be reduced. Moreover, when the content of the non-ionic surfactant is not more than any of the upper limits set forth above, this enables good implementation of inkjet coating.

<<Other components>>

The composition for a functional layer may contain other components besides those described above. Examples of such other components include a particulate polymer not having a core-shell structure, heat-resistant particles, an electrode active material, and optional additives. For example, in a case in which the composition for a functional layer contains heat-resistant particles as another component, a functional layer that is formed using the composition for a functional layer can function as a "heat-resistant layer". Moreover, in a case in which the composition for a functional layer contains an electrode active material, a functional layer that is formed using the composition for a functional layer can function as an "electrode mixed material layer".

-Particulate polymer not having core-shell structure-

The glass-transition temperature of the particulate polymer not having a core-shell structure is preferably -40°C or higher, more preferably -35°C or higher, and even more preferably -30°C or higher, and is preferably 0°C or lower, more preferably -10°C or lower, and even more preferably -20°C or lower. When the glass-transition temperature of the particulate polymer not having a core-shell structure is -40°C or higher, adhesiveness of an obtained functional layer can be increased. On the other hand, when the glass-transition temperature of the particulate polymer not having a core-shell structure is 0°C or lower, shedding of components from a substrate can be inhibited.

Examples of monomers that can be used to produce the particulate polymer not having a core-shell structure include the same monomers as those previously given as examples of monomers that can be used to produce the polymer of the core portion in the previously described particulate polymer having a core-shell structure. For example, a (meth) acrylic acid ester monomer, an aromatic vinyl monomer, an acid group-containing monomer, a cross-linkable monomer, and so forth are preferable as monomers used to produce the particulate polymer not having a core-shell structure. Note that one of such monomers may be used individually, or two or more of such monomers may be used in combination in a freely selected ratio.

From a viewpoint of increasing adhesiveness of an obtained functional layer, the proportion constituted by (meth) acrylic acid ester monomer units in the particulate polymer not having a core-shell structure when all repeating units (all monomer units) included in the polymer are taken to be 100 mass% is preferably 40 mass% or more, more preferably 50 mass% or more, and even more preferably 60 mass% or more, and is preferably 85 mass% or less, more preferably 80 mass% or less, and even more preferably 75 mass% or less.

From a viewpoint of increasing adhesiveness of an obtained functional layer, the proportion constituted by aromatic vinyl monomer units in the particulate polymer not having a core-shell structure when all repeating units (all monomer units) included in the polymer are taken to be 100 mass% is preferably 10 mass% or more, more preferably 15 mass% or more, and even more preferably 20 mass% or more, and is preferably 40 mass% or less, more preferably 35 mass% or less, and even more preferably 30 mass% or less.

The proportion constituted by acid group-containing monomer units in the particulate polymer not having a core-shell structure when all repeating units (all monomer units) included in the polymer are taken to be 100 mass% is preferably 0.5 mass% or more, more preferably 1 mass% or more, and even more preferably 2 mass% or more, and is preferably 10 mass% or less, more preferably 7 mass% or less, and even more preferably 5 mass% or less. By keeping the proportion constituted by acid group-containing monomer units in the particulate polymer not having a core-shell structure within any of the ranges set forth above, it is possible to increase dispersibility of the particulate polymer.

From a viewpoint of even further increasing adhesiveness of a functional layer, the proportion constituted by cross-linkable monomer units in the particulate polymer not having a core-shell structure when all repeating units (all monomer units) included in the polymer are taken to be 100 mass% is preferably 0.2 mass% or more, more preferably 0.5 mass% or more, and even more preferably 1 mass% or more, and is preferably 5 mass% or less, more preferably 4 mass% or less, and even more preferably 3 mass% or less.

[Volume-average particle diameter of particulate polymer not having core-shell structure]

The volume-average particle diameter of the particulate polymer not having a core-shell structure is preferably 50 nm or more, more preferably 100 nm or more, and even more preferably 200 nm or more, and is preferably 600 nm or less, more preferably 500 nm or less, and even more preferably 400 nm or less. When the volume-average particle diameter of the particulate polymer not having a core-shell structure is within any of the specific ranges set forth above, adhesiveness of an obtained functional layer can be increased.

[Content of particulate polymer not having core-shell structure]

The content of the particulate polymer not having a core-shell structure in the composition for a functional layer can be adjusted as appropriate to the extent that the desired effects according to the present disclosure are obtained, but is preferably 5 parts by mass or more, and more preferably 10 parts by mass or more per 100 parts by mass of the particulate polymer having a core-shell structure. When the content of the particulate polymer not having a core-shell structure is not less than any of the lower limits set forth above, shedding of the particulate polymers from a substrate can be inhibited.

[Production method of particulate polymer not having core-shell structure]

The particulate polymer not having a core-shell structure can be produced, for example, through polymerization of a monomer composition containing the above-described monomers, carried out in an aqueous solvent such as water, for example, but is not specifically limited to being produced in this manner. The proportion constituted by each monomer in the monomer composition is normally the same as the proportion constituted by each monomer unit in the particulate polymer not having a core-shell structure. A commonly known polymerization method and polymerization reaction can be adopted as the polymerization method and the polymerization reaction without any specific limitations.

-Heat-resistant particles-

The composition for a functional layer may contain heat-resistant particles as an optional component. The further inclusion of heat-resistant particles in the composition for a functional layer can improve heat resistance of an obtained functional layer.

The heat-resistant particles are not specifically limited and may be particles formed of an inorganic material (i.e., inorganic particles) or particles formed of an organic material (i.e., organic particles) that are electrochemically stable and that are stably present in the environment of use of a non-aqueous secondary battery. Note that inorganic particles or organic particles may be used by themselves as the heat-resistant particles, or inorganic particles and organic particles may be used in combination as the heat-resistant particles.

<<Inorganic particles>>

The inorganic particles may be particles of an inorganic oxide such as aluminum oxide (alumina, $Al_2O_3$), hydrous aluminum oxide (boehmite, $AlOOH$), gibbsite ($Al(OH)_3$), silicon oxide, magnesium oxide (magnesia), magnesium hydroxide, calcium oxide, titanium oxide (titania), barium titanate ($BaTiO_3$), $ZrO$, or alumina-silica complex oxide; particles of a nitride such as aluminum nitride or boron nitride; particles of covalently bonded crystals such as silicon or diamond; particles of sparingly soluble ionic crystals such as barium sulfate, calcium fluoride, or barium fluoride; or particles of clay such as talc or montmorillonite. These particles may be subjected to element substitution, surface treatment, solid solution treatment, or the like as necessary. Note that one type of inorganic particles may be used individually, or two or more types of inorganic particles may be used in combination.

<<Organic particles>>

The organic particles are particles formed of a polymer that differs from the specific particulate polymers described above (particulate polymer having a core-shell structure and particulate polymer not having a core-shell structure) and that does not display adhesiveness. Examples of the organic particles include particles of various cross-linked polymers such as cross-linked polymethyl methacrylate, cross-linked polystyrene, cross-linked polydivinylbenzene, cross-linked styrene-divinylbenzene copolymer, polystyrene, polyimide, polyamide, polyamide imide, melamine resin, phenolic resin, and benzoguanamine-formaldehyde condensate, particles of heat-resistant polymers such as polysulfone, polyacrylonitrile, polyaramids, polyacetal, and thermoplastic polyimide, modified products and derivatives of any of the preceding examples, and heat-resistant organic particles disclosed in WO2019/065416A1. Note that one type of organic particles may be used individually, or two or more types of organic particles may be used in combination. Also note that the organic particles are formed of a polymer that is not adhesive as previously described. Specifically, the polymer forming the organic particles preferably has a glass-transition temperature of 150°C or higher.

Of the heat-resistant particles described above, inorganic particles and organic particles formed of a polymer having a glass-transition temperature of 150°C or higher are preferable from a viewpoint of further improving heat resistance, inorganic particles are more preferable, and particles formed of alumina (alumina particles), particles formed of boehmite (boehmite particles), particles formed of barium sulfate (barium sulfate particles), and particles formed of magnesium hydroxide (magnesium hydroxide particles) are even more preferable

-Electrode active material-

A known positive electrode active material or negative electrode active material (for example, refer to JP2013-145763A) can be used as an electrode active material without any specific limitations.

-Optional additives-

Examples of optional additives include components such as surface tension modifiers, dispersants differing from a dispersant used in the previously described polymerization, antidesiccants, viscosity modifiers, reinforcing materials, and additives for electrolyte solution. Commonly known examples of such additives can be used without any specific limitations so long as they do not affect the battery reactions. One of these components may be used individually, or two or more of these components may be used in combination in a freely selected ratio.

Of these components, it is preferable that the composition for a functional layer contains a viscosity modifier. The inclusion of a viscosity modifier in the composition for a functional layer can even further increase adhesiveness of an obtained functional layer.

The viscosity modifier may be a natural polymer, a semi-synthetic polymer, or a synthetic polymer.

[Natural polymer]

The natural polymer may be a polysaccharide or protein of plant or animal origin, a fermentation treated product of any thereof by microorganisms or the like, or a heat-treated product of any thereof, for example.

These natural polymers can be classified as plant-based natural polymers, animal-based natural polymers, microorganism-produced natural polymers, and so forth.

Examples of plant-based natural polymers include gum arabic, gum tragacanth, galactan, guar gum, carob gum, karaya gum, carrageenan, pectin, quince seed (marmelo), algal colloid (phaeophyceae extract), starch (for example, starch derived from rice, corn, potato, or wheat), and glycyrrhizin. Examples of animal-based natural polymers include collagen, casein, albumin, and gelatin. Examples of microorganism-produced natural polymers include xanthan gum, dextran, succinoglucan, and pullulan.

[Semi-synthetic polymer]

The semi-synthetic polymer may be a cellulosic semi-synthetic polymer. Cellulosic semi-synthetic polymers can be categorized as non-ionic cellulosic semi-synthetic polymers, anionic cellulosic semi-synthetic polymers, and cationic cellulosic semi-synthetic polymers.

Examples of non-ionic cellulosic semi-synthetic polymers include alkyl celluloses such as methyl cellulose, methyl ethyl cellulose, ethyl cellulose, and microcrystalline cellulose; and hydroxyalkyl celluloses such as hydroxyethyl cellulose, hydroxybutyl methylcellulose, hydroxypropyl cellulose, hydroxypropyl methylcellulose, hydroxyethyl methylcellulose, hydroxypropyl methylcellulose stearoxy ether, carboxymethyl hydroxyethyl cellulose, alkyl hydroxyethyl cellulose, and nonoxynyl hydroxyethyl cellulose.

Examples of anionic cellulosic semi-synthetic polymers include substitution products obtained by substitution of the non-ionic cellulosic semi-synthetic polymers described above with various derivative groups and salts (sodium salts, ammonium salts, and the like) of these substitution products. Specific examples include sodium cellulose sulfate, methyl cellulose, methyl ethyl cellulose, ethyl cellulose, carboxymethyl cellulose (CMC), cellulose nanofibers (CNF), and salts thereof.

Examples of cationic cellulosic semi-synthetic polymers include low-nitrogen hydroxyethyl cellulose dimethyl diallylammonium chloride (polyquaternium-4), O-[2-hydroxy-3-(trimethylammonio)propyl]hydroxyethyl cellulose chloride (polyquaternium-10), and O-[2-hydroxy-3-(lauryldimethylammonio)propyl]hydroxyethyl cellulose chloride (polyquaternium-24).

[Synthetic polymer]

The synthetic polymer may be a polyacrylic acid salt such as sodium polyacrylate or ammonium polyacrylate, polyvinyl alcohol, polyvinyl acetal, polyethylene oxide, polyvinylpyrrolidone, a copolymer of (meth)acrylic acid or an acrylic acid salt with vinyl alcohol, a copolymer of (meth)acrylic acid or an acrylic acid salt with an acrylic acid ester, a fully or partially saponified copolymer of maleic anhydride, maleic acid, or fumaric acid with vinyl acetate, modified polyvinyl alcohol, modified polyacrylic acid, polyethylene glycol, a polycarboxylic acid, an ethylene-vinyl alcohol copolymer, a vinyl acetate polymer, an acrylamide polymer into which a carboxy group has been introduced, or the like.

Of these examples, it is preferable that a synthetic polymer is used as the viscosity modifier. The synthetic polymer is preferably water-soluble. By using a water-soluble synthetic polymer (hereinafter, also referred to as a water-soluble polymer) as the viscosity modifier, it is possible to effectively inhibit the composition for a functional layer from becoming adhered in proximity to an inkjet nozzle through drying and thereby causing poor ejection when the composition for a functional layer is used in inkjet coating, for example. Moreover, although a linear or branched water-soluble polymer can be used as the water-soluble polymer, it is preferable to use a linear water-soluble polymer. Since a linear water-soluble polymer has low thread formability, it is possible to inhibit the formation of satellites, mist, or the like due to thread forming by droplets during ejection when the composition for a functional layer is used in inkjet coating, for example. Of these examples described above, the water-soluble polymer compounded as the viscosity modifier is preferably a polyacrylic acid salt, polyethylene glycol, polyvinylpyrrolidone, polyvinyl acetal, or polyvinyl alcohol. When the viscosity modifier includes a $(\text{-CH}_2\text{-CHR-})_n$ structure (n is not less than 500 and not more than 3,500, and R is hydrogen or a substituent) and an ethylene oxide chain, or other such skeleton structure, hydrophobic interactions with a particulate polymer and hydrophilic interactions with a solvent (water) can contribute to dispersion stability of the particulate polymer.

Moreover, the weight-average molecular weight of the viscosity modifier is preferably 50,000 or more, and is preferably 500,000 or less, and more preferably 150,000 or less. When the weight-average molecular weight of the viscosity modifier is not less than the lower limit set forth above, a sufficient thickening effect can be displayed, and adhesiveness, ejection performance, and so forth can be even further increased. Moreover, when the weight-average molecular weight of the viscosity modifier is not more than any of the upper limits set forth above, ejection performance can be even further increased, the formation of satellites, mist, or the like due to thread forming by droplets during ejection can be inhibited, good ejection volume can be ensured, and adhesiveness of an obtained functional layer can be even further increased. Note that the weight-average molecular weight of the viscosity modifier can be measured as a polystyrene-equivalent value by gel permeation chromatography.

The amount of the viscosity modifier that is compounded in the composition for a functional layer when the amount of all solid content contained in the composition for a functional layer is taken to be 100 mass% is preferably 0.2 mass% or more, and more preferably 0.3 mass% or more, and is preferably 1.0 mass% or less, and more preferably 0.5 mass% or less. When the amount of the viscosity modifier is not less than any of the lower limits set forth above, adhesiveness of an obtained functional layer can be increased. When the amount of the viscosity modifier is not more than any of the upper limits set forth above, lithium deposition on an electrode surface during use of an obtained non-aqueous secondary battery can be inhibited, and increased resistance upon repeated use of the non-aqueous secondary battery can be suppressed.

<<Solvent>>

The solvent that can be compounded in the composition for a functional layer may be water, an organic solvent, or a mixture thereof, for example, without any specific limitations. Examples of the organic solvent include, but are not specifically limited to, alicyclic hydrocarbons such as cyclopentane and cyclohexane; aromatic hydrocarbons such as toluene and xylene; ketones such as ethyl methyl ketone and cyclohexanone; esters such as ethyl acetate, butyl acetate, $\gamma$-butyrolactone, and $\varepsilon$-caprolactone; nitriles such as acetonitrile and propionitrile; ethers such as tetrahydrofuran and ethylene glycol diethyl ether; and alcohols such as methanol, ethanol, isopropanol, ethylene glycol, propylene glycol, and ethylene glycol monomethyl ether.

Of the solvents described above, water is preferable from a viewpoint of simplification of equipment.

At least some of the above described solvent may be removed through drying or the like in a production step of a member for a non-aqueous secondary battery.

<Production method of composition for non-aqueous secondary battery functional layer>

No specific limitations are placed on the method by which the presently disclosed composition for a non-aqueous secondary battery functional layer is produced. For example, the presently disclosed composition for a non-aqueous secondary battery functional layer can be produced by stirring and mixing the particulate polymers, the non-ionic surfactant, and other optional components in the presence of the solvent. A known method can be adopted as the stirring and mixing method without any specific limitations. Specifically, a typical stirring vessel, ball mill, sand mill, bead mill, pigment disperser, ultrasonic disperser, grinding machine, homogenizer, planetary mixer, FILMIX, or the like can be used. Although no specific limitations are placed on the mixing conditions, the mixing can normally be performed in a temperature range of not lower than room temperature and not higher than 80°C for not less than 10 minutes and not more than several hours.

(Member for non-aqueous secondary battery)

The member for a non-aqueous secondary battery is a member in which a functional layer that is formed from the composition for a functional layer is disposed on a substrate. The substrate can be an electrode, a separator, or a current collector. In particular, the substrate is preferably an electrode or a separator. For example, in a case in which the substrate is a separator, it is possible to effectively inhibit deposition of lithium on an electrode surface when a lithium ion secondary battery is formed.

<Substrate>

A known electrode can be used without any specific limitations as an electrode serving as the substrate. For example, an electrode that is obtained by forming an electrode mixed material layer at one side or both sides of a current collector or an electrode that is obtained by further forming a porous membrane layer on an electrode mixed material layer that is a constituent element of the electrode can be used as the electrode.

Note that any current collector, electrode mixed material layer, and porous membrane layer that can be used in the field of secondary batteries, such as any of those described in JP2013-145763A, for example, can be used without any specific limitations as the current collector, the electrode mixed material layer, and the porous membrane layer.

Moreover, a known separator such as an organic separator can be used without any specific limitations as a separator serving as the substrate. An organic separator is a porous member that is formed of an organic material. Examples of organic separators include microporous membranes and non-woven fabrics that contain a polyolefin resin such as polyethylene or polypropylene, an aromatic polyamide resin, or the like, with a microporous membrane or non-woven fabric made of polyethylene being preferable due to having excellent strength. Moreover, a ceramic-coated separator that is obtained by coating the above-described separator with a heat-resistant ceramic such as alumina can alternatively be used.

Furthermore, the separator may have a porous membrane layer formed at one side or both sides thereof. The term "porous membrane layer" refers to a layer containing non-conductive particles such as described in JP2013-145763A, for example.

The substrate preferably satisfies an attribute that in a situation in which the composition for a functional layer is applied onto the substrate by an inkjet method, the penetration rate of the composition for a functional layer is 0.4 nL/s or less. Moreover, from a viewpoint of increasing adhesiveness and causing a secondary battery to display excellent battery performance, the penetration rate of the composition for a functional layer in a situation in which the composition for a functional layer is applied onto the substrate by an inkjet method is preferably 0.3 nL/s or less. No specific limitations are placed on the lower limit for this penetration rate, and the penetration rate may be 0 nL/s (i.e., the substrate may have poor penetration of the composition for a functional layer).

Moreover, the surface roughness (Sa) of the substrate is preferably 2.5 $\mu$m or less, and more preferably 0.4 $\mu$m or less from a viewpoint of increasing adhesiveness and causing a secondary battery to display excellent battery performance. The lower limit for the surface roughness (Sa) is not specifically limited and can be 0.05 $\mu$m or more.

<Functional layer formed from composition for functional layer>

The functional layer formed from the composition for a functional layer is a dried product obtained through drying of the presently disclosed composition for a non-aqueous secondary battery functional layer. Consequently, the functional layer formed from the composition for a functional layer can contain various components that can be contained in the composition for a functional layer set forth above. Not only is the functional layer disposed on the substrate, but a portion thereof can also penetrate into and be present inside of the substrate. Moreover, although the particulate polymers previously described as components that can be contained in the composition for a functional layer are present in a particulate form in the composition for a functional layer, these particulate polymers may have a particulate form or any other form in the functional layer that is formed from the composition for a functional layer.

The functional layer can be formed such as to satisfy a pattern having any plan-view shape such as a striped shape, a dotted shape, or a lattice shape without any specific limitations. In particular, it is preferable that the functional layer has a dotted pattern from a viewpoint of reducing resistance of a secondary battery. The functional layer having a dotted pattern can be formed by using a coating machine to form a coating layer with the composition for a functional layer by an inkjet method and then drying this coating layer, for example.

The dot size of the dotted pattern of the functional layer is preferably 10 $\mu$m or more, more preferably 50 $\mu$m or more, and even more preferably 100 $\mu$m or more in diameter, and is preferably 1,000 $\mu$m or less, more preferably 300 $\mu$m or less, and more preferably 150 $\mu$m or less in diameter. When the diameter of dots of the functional layer is not less than any of the lower limits set forth above, adhesive strength that can be displayed by the functional layer can be increased. On the other hand, when the diameter of dots of the functional layer is not more than any of the upper limits set forth above, deterioration of output characteristics of a secondary battery can be inhibited.

The constituent dots of a functional layer dotted pattern may have a solid circular shape in plan-view or may have a hollow circular shape (also referred to as a doughnut shape) in plan-view. Although factors determining whether the shape of dots is solid or hollow are complex, the penetrability of the composition for a functional layer with respect to the substrate where the functional layer is formed and the viscosity and surface tension of the composition for a functional layer can be involved, for example. In a case in which the plan-view shape of the dots is a hollow circular shape (i.e., a doughnut shape), the proportion occupied by the hollow portion is preferably small. In other words, the difference between the outer diameter of the dot and the diameter of the hollow portion (hereinafter, also referred to as the "inner diameter of the dot") is preferably large. (Note that this difference is also referred to below as the "profile width" of the functional layer.) The difference described above is preferably 30 $\mu$m or more, and more preferably 53 $\mu$m or more from a viewpoint of even further increasing adhesiveness of the functional layer. Since the dots may have a solid shape, no specific limitations are placed on the upper limit for the difference.

The area density of the functional layer is preferably 0.02 g/m$^2$ or more, and is preferably 1.0 g/m$^2$ or less, and more preferably 0.70 g/m$^2$ or less. When the area density of the functional layer is not less than the lower limit set forth above, adhesive strength of an electrode and a separator can be sufficiently ensured. Moreover, when the area density of the functional layer is not more than any of the upper limits set forth above, sufficiently high output characteristics of a secondary battery can be ensured.

(Method of producing member for non-aqueous secondary battery)

A feature of the method of producing a member for a non-aqueous secondary battery is that the method includes a step (application step) of ejecting the composition for a functional layer set forth above onto a substrate by an inkjet method to form a coating layer. By providing a coating layer that is an inkjet coating material of the composition for a functional layer on a substrate, it is possible to produce a member for a non-aqueous secondary battery that has excellent adhesiveness and that can cause a non-aqueous secondary battery to display excellent electrical characteristics.

More specifically, the method of producing a member for a non-aqueous secondary battery can include a step (drying step) of drying the coating layer that has been applied onto the substrate after the application step described above.

<Application step>

In the application step, droplets of the presently disclosed composition for a non-aqueous secondary battery functional layer are applied onto a substrate via a nozzle of an inkjet-type coating machine. The substrate can be any of those that were previously described. The inkjet-type coating machine can be a conventional inkjet-type coating machine that is commonly known.

The application conditions by the inkjet method are not specifically limited so long as the composition for a non-aqueous secondary battery functional layer can be applied onto the substrate, and the application conditions can be adjusted as appropriate depending on the desired form of the obtained functional layer (plan-view shape, dot diameter, dot thickness, area density, etc.).

<Drying step>

In the drying step, the coating layer that has been formed on the substrate is dried to form a functional layer that is formed of a dried product of the composition for a functional layer on the substrate. The drying can be performed by a commonly known method without any specific limitations. Examples of drying methods that may be used include drying using a heating device such as a heater, a dryer, or a heating roller. Although no specific limitations are placed on the drying conditions, the drying temperature is preferably 90°C or lower, and the drying time is preferably not less than 1 second and not more than 120 seconds.

(Non-aqueous secondary battery)

The presently disclosed non-aqueous secondary battery includes the presently disclosed member for a non-aqueous secondary battery. For example, the presently disclosed non-aqueous secondary battery may include electrodes (positive electrode and negative electrode), an electrolyte solution, and a separator. In particular, in the presently disclosed non-aqueous secondary battery, it is preferable that at least one of the positive electrode and the negative electrode is affixed to the separator via the presently disclosed functional layer for a non-aqueous secondary battery as an adhesive layer. The presently disclosed non-aqueous secondary battery can display excellent battery characteristics as a result of including the presently disclosed member for a non-aqueous secondary battery.

Known electrodes can be used as the electrodes that are used in the presently disclosed secondary battery without any limitations. Moreover, a known separator can be used as the separator that is used in the presently disclosed secondary battery without any limitations. In the presently disclosed non-aqueous secondary battery, it is preferable that at least one of an electrode and a separator is the presently disclosed battery member for a non-aqueous secondary battery including the presently disclosed functional layer.

An organic electrolyte solution obtained by dissolving a supporting electrolyte in an organic solvent is normally used as the electrolyte solution that is used in the presently disclosed secondary battery. For example, when the non-aqueous secondary battery is a lithium ion secondary battery, a lithium salt is used as the supporting electrolyte. Examples of lithium salts that can be used include $LiPF_6$, $LiAsF_6$, $LiBF_4$, $LiSbF_6$, $LiAlCl_4$, $LiClO_4$, $CF_3SO_3Li$, $C_4F_9SO_3Li$, $CF_3COOLi$, $(CF_3CO)_2NLi$, $(CF_3SO_2)_2NLi$, and $(C_2F_5SO_2)NLi$. Of these lithium salts, $LiPF_6$, $LiClO_4$, and $CF_3SO_3Li$ are preferable because they readily dissolve in solvents and exhibit a high degree of dissociation, with $LiPF_6$ being particularly preferable. One electrolyte may be used individually, or two or more electrolytes may be used in combination in a freely selected ratio. In general, lithium ion conductivity tends to increase when a supporting electrolyte having a high degree of dissociation is used. Therefore, lithium ion conductivity can be adjusted through the type of supporting electrolyte that is used.

The organic solvent used in the electrolyte solution is not specifically limited so long as the supporting electrolyte can dissolve therein. Examples of organic solvents that can suitably be used include carbonates such as dimethyl carbonate (DMC), ethylene carbonate (EC), diethyl carbonate (DEC), propylene carbonate (PC), butylene carbonate (BC), and ethyl methyl carbonate (EMC); esters such as γ-butyrolactone and methyl formate; ethers such as 1,2-dimethoxyethane and tetrahydrofuran; and sulfur-containing compounds such as sulfolane and dimethyl sulfoxide.

Furthermore, a mixture of such solvents may be used. Of these solvents, carbonates are preferable due to having a high permittivity and a wide stable potential region, and a mixture of ethylene carbonate and ethyl methyl carbonate is more preferable.

Moreover, a known additive such as vinylene carbonate (VC), fluoroethylene carbonate (FEC), or ethyl methyl sulfone may be added to the electrolyte solution.

<Production method of secondary battery>

The presently disclosed non-aqueous secondary battery can be produced by, for example, performing rolling, folding, or the like, as necessary according to the battery shape, with respect to a stack that is obtained through stacking of an electrode-separator laminate including the presently disclosed functional layer, placing the stack in a device container (battery container), injecting the electrolyte solution into the device container, and sealing the device container. Moreover, the stack may be produced by stacking the laminate with an additional battery member (electrode and/or separator, etc.). The presently disclosed secondary battery may be provided with an overcurrent preventing device such as a fuse or a PTC device, an expanded metal, a lead plate, or the like, as necessary, in order to prevent pressure increase inside the secondary battery and occurrence of overcharging or overdischarging. The shape of the secondary battery may be a coin type, button type, sheet type, cylinder type, prismatic type, flat type, or the like.

EXAMPLES

The following provides a more specific description of the present disclosure based on examples. However, the present disclosure is not limited to these examples. In the following description, "%" and "parts" used in expressing quantities are by mass, unless otherwise specified. Moreover, in the case of a polymer that is produced through polymerization of a plurality of types of monomers, the proportion in the polymer constituted by a monomer unit that is formed through polymerization of a given monomer is normally, unless otherwise specified, the same as the ratio (charging ratio) of the given monomer among all monomers used in polymerization of the polymer.

Various measurements and evaluations in the examples and comparative examples were performed by the following methods.

<Glass-transition temperature>

A water dispersion of a particulate polymer produced in each production example was dried at a temperature of 130°C for 1 hour to obtain a measurement sample. The measurement sample was weighed into an aluminum pan in an amount of 10 mg and was measured by a differential scanning calorimeter (EXSTAR DSC6220 produced by SII NanoTechnology Inc.) under conditions prescribed by JIS Z8703 with a measurement temperature range of -100°C to 200°C and a heating rate of 10°C/min to obtain a differential scanning calorimetry (DSC) curve. Note that an empty aluminum pan was used as a reference. In the heating process, an intersection point of a baseline directly before a heat absorption peak on the DSC curve at which a derivative signal (DDSC) reached 0.05 mW/min/mg or more and a tangent to the DSC curve at a first inflection point to appear after the heat absorption peak was determined as the glass-transition temperature (°C). Note that in the case of a particulate polymer having a core-shell structure, two peaks were detected. In this case, the glass-transition temperature of a core portion of the particulate polymer was determined based on the peak having higher intensity and the glass-transition temperature of a shell portion of the particulate polymer was determined based on the peak having lower intensity.

<Volume-average particle diameter>

The volume-average particle diameter of a particulate polymer produced in each production example was measured by laser diffraction. Specifically, in a particle size distribution (by volume) obtained using a laser diffraction particle size analyzer (produced by Beckman Coulter, Inc.; product name: LS-13 320) with a water dispersion (solid content concentration: 0.1 mass%) containing the produced particulate polymer as a sample, the particle diameter at which cumulative volume calculated from a small diameter end of the distribution reached 50% was determined and was taken to be the volume-average particle diameter D50 (nm).

<Degree of swelling>

A water dispersion of a particulate polymer produced in each production example was dried, and then approximately 0.2 g of the resultant dried product was pressed for 2 minutes under conditions of a temperature of 200°C and a pressure of 5 MPa to obtain a film. The obtained film was cut to 1 cm-square to obtain a test specimen, and the mass W2 (g) of this test specimen was measured. Next, the test specimen was immersed in electrolyte solution (solution of LiPF$_6$ dissolved with a concentration of 1 mol/L in a mixed solvent of ethylene carbonate/diethyl carbonate = 3/7 (volume ratio)) at a temperature of 60°C for 72 hours. Thereafter, the test specimen was removed from the electrolyte solution, mixed solvent on the surface was wiped off, and the mass W3 (g) of the test specimen was measured. The degree of swelling (%) was calculated according to the following formula.

$$\text{Degree of swelling (\%)} = W3/W2 \times 100$$

<Surface tension of composition for functional layer>

The surface tension of a composition for a functional layer produced in each example or comparative example was measured by the platinum plate method using a high-functionality surface tensiometer (DY-500 produced by Kyowa Interface Science Co., Ltd.). An average value of the surface tension was calculated from measured values for three repetitions, and this average value was taken to be the surface tension of the composition for a functional layer. Measurements were performed at temperatures of 30°C and 50°C. In addition, the surface tension $S^{30}$ at 30°C and the surface tension $S^{50}$ at 50°C were used to calculate the value of $S^{30}$ - $S^{50}$.

<Viscosity of composition for functional layer>

The viscosity of a composition for a functional layer was measured in accordance with JIS Z8803:1991 using a single-cylinder rotational viscometer (Brookfield B-type viscometer) under conditions of a rotation speed of 60 rpm and a temperature of 30°C.

<Surface roughness (Sa)>

An electrode (negative electrode or positive electrode) and a separator produced in each example or comparative example were observed using a laser displacement microscope (produced by Keyence Corporation; model: VK-X1000). The electrode and the separator were each measured in an arbitrary 500 μm-square region, and the arithmetic mean height was calculated. Average values for arithmetic mean heights obtained through measurements made in the same manner at a total of 10 locations on the electrode and the separator were respectively taken to be the surface roughness (Sa) [μm] of the electrode and the surface roughness (Sa) [μm] of the separator.

<Area density of functional layer>

The area density of a functional layer was determined from the difference in terms of mass per unit area between before supply of a composition for a functional layer onto a substrate and after supply and drying of the composition for a functional layer on the substrate.

<Functional layer dot diameter (outer diameter and inner diameter), profile width, and coating section area>

A composition for adhesion produced in each example or comparative example was supplied onto an electrode or separator that was the same as an electrode or separator used in that example or comparative example, and the composition for adhesion was dried under the same conditions as in that example or comparative example to form a functional layer. A laser microscope (VK-X1000 produced by Keyence Corporation) was used to measure the dot diameter (outer diameter and inner diameter) of the functional layer. Note that each diameter was taken to be an arithmetic mean value of measurements performed for 20 dots. The difference between the determined outer diameter and inner diameter was calculated as a profile width of the functional layer.

In addition, the coating section area per one dot was measured by extracting the coating section from a laser microscope image by binarization. An arithmetic mean value for 20 measurements was taken to be the coating section area.

<Penetration rate>

A high-speed camera was used to record the appearance of supply of a composition for a functional layer onto a substrate and onto a PET film from an inkjet head of an inkjet-type coating machine and to measure the penetration rate of the composition for a functional layer into the substrate. Specifically, the height h and width 2a of the composition for a functional layer that had been supplied onto the substrate were measured through image analysis, and the remaining amount of the composition for a functional layer on the substrate was determined from the spherical cap volume equation: $V = \pi h/6 \times (3a^2 + h^2)$. The change over time of the remaining amount after supply onto the PET film was taken to be the drying rate, the change over time of the remaining amount after supply onto the substrate was taken to be the total rate of drying and penetration, and the penetration rate (nL/s) of the composition for a functional layer into the substrate was calculated from the determined rates through subtraction.

<Inkjet ejection characteristics>

An ejection test was performed for a composition for a non-aqueous secondary battery functional layer produced in each example or comparative example using a high performance head-mounted ejection test kit (IJK-200S produced by MICROJET Corporation). Ejection characteristics were evaluated by the following standard.

A: Ejection possible
B: Ejection not possible

<Adhesiveness of functional layer>

An electrode and a separator (at least one of which included a functional layer) that were the same as an electrode (negative electrode or positive electrode) and a separator prepared in each example or comparative example were pressed by a pressing roll with a line speed of 1 m/min under pressing conditions of a temperature of 25°C and a line pressure of 20 kgf/cm to affix the electrode and separator. Thereafter, the resultant laminate (i.e., a laminate in which one electrode (negative electrode or positive electrode) and one separator were adhered via a functional layer) was cut out and sampled to obtain test specimens.
Each of these test specimens was placed with the surface at the current collector-side of the electrode facing downward, and cellophane tape was affixed to the surface at the current collector-side of the electrode. Tape prescribed by JIS Z1522 was used as the cellophane tape. Moreover, the cellophane tape was fixed to a horizontal test stage in advance. One end of the separator was pulled vertically upward at a pulling speed of 50 mm/min to peel off the separator, and the stress during this peeling was measured.
A total of 6 measurements were made in this manner. An average value of the stress was determined as the peel strength, and adhesiveness (dry adhesiveness) between the electrode and the separator was evaluated by the following standard.
A larger peel strength indicates higher adhesiveness between the electrode and the separator.

A++: Peel strength of 4.0 N/m or more
A+: Peel strength of not less than 3.0 N/m and less than 4.0 N/m
A: Peel strength of not less than 2.0 N/m and less than 3.0 N/m
B: Peel strength of not less than 1.0 N/m and less than 2.0 N/m
C: Peel strength of not less than 0.5 N/m and less than 1.0 N/m
D: Peel strength of less than 0.5 N/m

<Rate of lithium deposition on negative electrode surface>

A lithium ion secondary battery produced in each example or comparative example was fully charged to a state of charge (SOC) of 100% with a 1C constant current in an environment having a temperature of -10°C. The fully charged secondary battery was disassembled to remove a negative electrode, and the condition of the surface of a negative electrode mixed material layer of the negative electrode was observed. The area of lithium that had been deposited on the surface of the negative electrode mixed material layer was measured, and the rate of lithium deposition on the negative electrode surface was calculated (= (area of deposited lithium/area of surface of negative electrode mixed material layer) $\times$ 100(%)). An evaluation was made by the following standard. A lower rate of lithium deposition on the negative electrode surface indicates that lithium deposition on the negative electrode surface during charging is inhibited.

A: Lithium deposition rate of less than 5%
B: Lithium deposition rate of 5% or more

<Output characteristics>

A lithium ion secondary battery produced in each example or comparative example was constant-current constant-voltage (CC-CV) charged to 4.3 V in an atmosphere having a temperature of 25°C for cell preparation. The prepared cell was discharged to 3.0 V by 0.2C and 1C constant-current methods in an atmosphere having a temperature of -10°C, and the electric capacity was determined for each thereof. A discharge capacity maintenance rate expressed by the ratio of the electric capacities was determined (= (electric capacity at 1C/electric capacity at 0.2C) $\times$ 100(%)). These measurements were performed for 5 lithium ion secondary battery cells, and an average value of the determined discharge capacity maintenance rates was evaluated by the following standard as an output characteristic. A larger value indicates better output characteristics.

A: Average discharge capacity maintenance rate of 90% or more
B: Average discharge capacity maintenance rate of less than 90%

<Increased resistance in cycling test>

A produced lithium ion secondary battery was tightened in a pressing jig such that the surface pressure was 1 MPa and was subsequently subjected to a cycling test at 45°C. The cycling test conditions were set as 500 charge/-discharge cycles of 1C CC+CV charging (4.3 V, 1/50C cut) and 1C CC discharging (3.0 V cut). Thereafter, the lithium ion secondary battery was cooled to 25°C while still tightened in the pressing jig, and an output characteristic was measured in the same manner as described above in <Output characteristics>. A resistance maintenance rate (%) between before and after cycling was calculated (= discharge capacity maintenance rate after cycling test/discharge capacity maintenance rate before cycling test $\times$ 100) and was evaluated by the following standard. A larger resistance maintenance rate between before and after cycling indicates a smaller increase of resistance in the cycling test.

A: Resistance maintenance rate of 75% or more
B: Resistance maintenance rate of not less than 60% and less than 75%
C: Resistance maintenance rate of not less than 40% and less than 60%
D: Resistance maintenance rate of less than 40%

(Production Example 1)

<Production of particulate polymer 1>

A reactor including a stirrer was supplied with 100 parts of deionized water and 0.3 parts of ammonium persulfate. The gas phase was purged with nitrogen gas, and the temperature was raised to 80°C. Meanwhile, a monomer composition for core portion formation was obtained in a separate vessel by mixing 40 parts of deionized water, 0.2 parts of sodium dodecylbenzenesulfonate as an emulsifier, 28.3 parts of styrene as an aromatic monovinyl monomer, 66.6 parts of 2-ethylhexyl acrylate as a monofunctional (meth)acrylic acid ester monomer, 3 parts of methacrylic acid as an acidic group-containing monomer, and 0.1 parts of ethylene glycol dimethacrylate as a cross-linkable monomer. This monomer composition for core portion formation was continuously added into the reactor over 3 hours so as to perform a polymerization reaction at a temperature of 80°C. Polymerization was continued until a polymerization conversion rate of 95% was reached to yield a water dispersion containing a particulate polymer forming a core portion. Next, a monomer composition for shell portion formation containing 1.3 parts of styrene as an aromatic monovinyl monomer, 0.65 parts of butyl acrylate, and 0.05 parts of methacrylic acid as an acidic group-containing monomer was continuously supplied into this water dispersion over 60 minutes, and polymerization was continued. At the point at which the polymerization conversion rate reached 98%, cooling was performed to quench the reaction to thereby produce a water dispersion containing a particulate polymer 1.

The volume-average particle diameter, degree of swelling, and glass-transition temperature of the obtained particulate polymer 1 were measured. The results are shown in Table 1.

Upon observation of the cross-sectional structure of the particulate polymer using a transmission electron microscope (TEM), the particulate polymer was confirmed to have a core-shell structure in which a shell portion partially covered the outer surface of a core portion.

(Production Example 2)

<Production of particulate polymer 2>

A reactor including a stirrer was supplied with 90 parts of deionized water and 0.5 parts of ammonium persulfate. The gas phase was purged with nitrogen gas, and the temperature was raised to 80°C. Meanwhile, a monomer composition was obtained in a separate vessel by mixing 15 parts of deionized water, 1.0 parts of NEOPELEX G15 (produced by Kao Corporation) as an emulsifier, 70.0 parts of 2-ethylhexyl acrylate as a monofunctional (meth)acrylic acid ester monomer, 25.0 parts of styrene as an aromatic monovinyl monomer, 1.7 parts of allyl glycidyl ether and 0.3 parts of allyl methacrylate as cross-linkable monomers, and 3.0 parts of acrylic acid as an acidic group-containing monomer.

This monomer composition was continuously added into the reactor over 4 hours so as to perform polymerization. The reaction was performed at a temperature of 80°C during the continuous addition. Once the continuous addition was complete, a further 3 hours of stirring was performed at a temperature of 80°C, and then the reaction was ended.

The resultant water dispersion was cooled to a temperature of 25°C, was subsequently adjusted to pH 8.0 through addition of sodium hydroxide aqueous solution, and then unreacted monomer was removed through introduction of steam to yield a water dispersion of a particulate polymer 2 not having a core-shell structure. Various measurements were performed in the same way as in Production Example 1. The results are shown in Table 1.

(Example 1)

<Production of composition for functional layer>

The water dispersion of the particulate polymer 1 obtained in Production Example 1 and the water dispersion of the particulate polymer 2 obtained in Production Example 2 were mixed such that a mass ratio of the amounts of solid content was 100:10, and then deionized water was further added to perform dilution to a solid content concentration of 10.5%. An ethylene oxide-propylene oxide copolymer (NOPTECHS® ED052 (NOPTECHS is a registered trademark in Japan, other countries, or both)) as a non-ionic surfactant B, a water-soluble acrylic acid-based dispersant (ARON® A-6114 (ARON is a registered trademark in Japan, other countries, or both)), and propylene glycol as an antidesiccant were further added to the obtained mixture in mass proportions indicated in Table 2, and the solid content concentration was adjusted to 10% to yield a composition for a functional layer as a composition for an adhesive layer. Various attributes were measured for the obtained composition for a functional layer. The results are shown in Table 1.

<Production of negative electrode web>

A 5 MPa pressure-resistant vessel equipped with a stirrer was charged with 33 parts of 1,3-butadiene, 3.5 parts of itaconic acid, 63.5 parts of styrene, 0.4 parts of sodium dodecylbenzenesulfonate as an emulsifier, 150 parts of deionized water, and 0.5 parts of potassium persulfate as a polymerization initiator. These materials were thoroughly stirred and were then heated to a temperature of 50°C so as to initiate polymerization. At the point at which the polymerization conversion rate reached 96%, cooling was performed to quench the reaction to yield a mixture containing a binder (SBR) for a negative electrode mixed material layer. The mixture containing the binder for a negative electrode mixed material layer was adjusted to pH 8 through addition of 5% sodium hydroxide aqueous solution and was then subjected to thermal-vacuum distillation to remove unreacted monomer. Thereafter, the mixture was cooled to a temperature of 30°C or lower to yield a water dispersion containing the desired binder for a negative electrode mixed material layer.

Next, 100 parts of artificial graphite (volume-average particle diameter: 15.6 μm) as a negative electrode active material, 1 part in terms of solid content of a 2% aqueous solution of a sodium salt of carboxymethyl cellulose (produced by Nippon Paper Industries Co., Ltd.; product name: MAC350HC) as a viscosity modifier, and deionized water were mixed, were adjusted to a solid content concentration of 68%, and were subsequently further mixed at a temperature of 25°C for 60 minutes. The solid content concentration was further adjusted to 62% with deionized water, and then a further 15 minutes of mixing was performed at a temperature of 25°C. Deionized water and 1.5 parts in terms of solid content of the water dispersion containing the binder for a negative electrode mixed material layer described above were added to the resultant mixture, the final solid content concentration was adjusted to 52%, and a further 10 minutes of mixing was performed. The resultant mixture was subjected to defoaming under reduced pressure to yield a slurry composition for a non-aqueous secondary battery negative electrode having good fluidity.

The obtained slurry composition for a non-aqueous secondary battery negative electrode was applied onto both sides of copper foil of 20 μm in thickness serving as a current collector by a comma coater such as to have a thickness after drying of approximately 150 μm. The slurry composition was dried by conveying the copper foil inside an oven having a temperature of 60°C for 2 minutes at a speed of 0.5 m/min. Thereafter, 2 minutes of heat treatment was performed at a temperature of 120°C to obtain a pre-pressing negative electrode web. The pre-pressing negative electrode web was rolled by roll pressing to obtain a post-pressing negative electrode web having a negative electrode mixed material layer thickness of 80 μm.

<Production of positive electrode web>

A slurry composition for a non-aqueous secondary battery positive electrode was obtained by mixing 100 parts of LiCoO₂ having a volume-average particle diameter of 12 μm as a positive electrode active material, 2 parts of acetylene black (produced by Denka Company Limited; product name: HS-100) as a conductive material, 2 parts in terms of solid content of polyvinylidene fluoride (produced by Kureha Corporation; product name: #7208) as a binder, and N-methylpyrrolidone as a solvent, adjusting the total solid content concentration to 70%, and mixing these materials using a planetary mixer.

The obtained slurry composition for a non-aqueous secondary battery positive electrode was applied onto both sides of aluminum foil of 20 μm in thickness serving as a current collector by a comma coater such as to have a thickness after drying of approximately 150 μm. The slurry composition was dried by conveying the aluminum foil inside of an oven having a temperature of 60°C for 2 minutes at a speed of 0.5 m/min. Thereafter, 2 minutes of heat treatment was performed at a temperature of 120°C to obtain a positive electrode web.

The obtained positive electrode web was rolled using a roll press to obtain a post-pressing positive electrode web including positive electrode mixed material layers.

<Preparation of separator web>

A separator web (produced by Asahi Kasei Corporation; product name: ND412; surface roughness Sa: 0.1 μm) made of polyethylene (PE) was prepared.

<Production of laminate>

The produced composition for a functional layer, negative electrode web, positive electrode web, and separator web were used to produce a laminate as illustrated in FIG. 1. Note that in FIG. 1, reference sign 91 indicates a conveying roller and reference sign 92 indicates a heating roller.

Specifically, a separator web 20A fed from a separator web roll was conveyed at a speed of 10 m/min while the composition for a functional layer was supplied onto one surface of the separator web 20A from an inkjet head of an inkjet-type coating machine 52 (KM1024 (shear-mode type) produced by Konica) and a negative electrode web 30A fed from a negative electrode web roll was affixed to the separator web 20A by pressure bonding rollers 61 and 62. The composition for a functional layer was also supplied onto the other surface of the separator web 20A from an inkjet head of an inkjet-type coating machine 51 (KM1024 (shear-mode type) produced by Konica), and a positive electrode web 10A fed from a positive electrode web roll was affixed to the laminate of the separator web 20A and the negative electrode web 30A by pressure bonding rollers 61 and 62. The composition for a functional layer was also supplied onto a surface at an opposite side of the positive electrode web 10A to the separator web 20A side from an inkjet head of an inkjet-type coating machine 53 (KM1024 (shear-mode type) produced by Konica), a pre-cut separator 40 was placed thereon, and then the separator 40 was affixed to the laminate of the positive electrode web 10A, the separator web 20A, and the negative electrode web 30A by pressure bonding rollers 61 and 62. Moreover, the composition for a functional layer was supplied onto the separator 40 from an inkjet head of an inkjet-type coating machine 54 (KM1024 (shear-mode type) produced by Konica), and then cutting was performed by a cutting machine 70 to obtain a laminate in which a negative electrode, a separator, a positive electrode, and a separator were stacked in this order. Note that affixing using pressure bonding rollers 61 and 62 was performed at a temperature of 25°C and a pressure of 2 MPa.

Moreover, the supplied composition for a functional layer was dried (drying temperature: 50°C; drying time: 1 second) by using heating rollers 92 for some of conveying rollers 91.

Supply of the composition for a functional layer from the coating machines 51 to 54 was performed such that the composition for a functional layer had a uniform dotted pattern. The dot size was 130 μm in diameter (outer diameter: 130 μm; inner diameter: 65 μm), and the interval between dots was 300 μm pitch. The area density of the composition for a functional layer was 0.1 g/m². Moreover, the coating section area per one dot was measured and was determined to be 9,955 μm².

<Production of secondary battery>

A stack was produced by stacking five laminates produced as described above and performing 10 seconds of pressing at a temperature of 25°C and a pressure of 2 MPa. This stack was enclosed in an aluminum packing case serving as a case, and then electrolyte solution (solvent: ethylene carbonate/diethyl carbonate/vinylene carbonate = 68.5/30/1.5 (volume ratio); electrolyte: $LiPF_6$ of 1 M in concentration) was injected. An opening of the aluminum packing case was subsequently closed by heat sealing at a temperature of 150°C to produce a stacked lithium ion secondary battery having a capacity of 800 mAh. The rate of lithium deposition on a negative electrode surface, output characteristics, and increased resistance in a cycling test were evaluated for the obtained secondary battery. The results are shown in Table 2.

(Example 2)

Various operations, measurements, and evaluations were performed in the same way as in Example 1 with the exception that in production of the secondary battery, the used separator was changed to a ceramic-coated separator (surface roughness Sa: 0.2 $\mu$m) that was produced as described below. The results are shown in Table 2.

<Production of ceramic-coated separator>

A ceramic-coated separator was produced according to a method disclosed in Example 1 of WO2022/230711A1. In this production, alumina (AKP3000 produced by Sumitomo Chemical Co., Ltd.; volume-average particle diameter: 0.7 $\mu$m) was used as a heat-resistant ceramic. The obtained ceramic-coated separator had a structure in which ceramic coating layers, each of 2.0 $\mu$m in thickness, were disposed at both sides of a separator substrate (microporous membrane made of polyethylene; thickness: 12 $\mu$m; Gurley value: 100 s/100 cc).

(Example 3)

Various operations, measurements, and evaluations were performed in the same way as in Example 1 with the exception that in production of the secondary battery, the used separator was changed to a ceramic-coated separator (surface roughness Sa: 0.4 $\mu$m) that was produced as described below. The results are shown in Table 2.

<Production of ceramic-coated separator>

A ceramic-coated separator was produced in the same way as in Example 2 with the exception that the alumina used as a heat-resistant ceramic was changed to alumina having a volume-average particle diameter of 0.3 $\mu$m (AKP30 produced by Sumitomo Chemical Co., Ltd.).

(Example 4)

A composition for adhesion and a secondary battery were produced in the same way as in Example 1 with the exception that in production of the secondary battery, a laminate produced as described below was used as a laminate. Moreover, various measurements and evaluations were performed in the same way as in Example 1. The results are shown in Table 2.

<Production of laminate>

A laminate was obtained by performing operations in the same way as in Example 1 with the exception that in production of the laminate, a positive electrode web (surface roughness Sa: 0.2 $\mu$m) produced in the same way as in Example 1 was used as the web 20A illustrated in FIG. 1, a separator web that was the same as that used in Example 1 was used as the web 10A and the web 30A illustrated in FIG. 1, and a negative electrode cut out from a negative electrode web produced in the same way as in Example 1 was used as the substrate 40 illustrated in FIG. 1.

(Example 5)

A composition for adhesion and a secondary battery were produced in the same way as in Example 1 with the exception that in production of the secondary battery, a laminate produced as described below was used as a laminate. Moreover, various measurements and evaluations were performed in the same way as in Example 1. The results are shown in Table 2.

<Production of laminate>

A laminate was obtained by performing operations in the same way as in Example 1 with the exception that in production of the laminate, a negative electrode web (surface roughness Sa: 1.9 $\mu$m) produced in the same way as in Example 1 was used as the web 20A illustrated in FIG. 1, a separator web that was the same as that used in Example 1 was used as the web 10A and the web 30A illustrated in FIG. 1, and a positive electrode cut out from a positive electrode web produced in the same way as in Example 1 was used as the substrate 40 illustrated in FIG. 1.

(Example 6)

Various operations, measurements, and evaluations were performed in the same way as in Example 1 with the exception that in production of the composition for a functional layer, the amount of the non-ionic surfactant B and the amount of water were changed as indicated in Table 2. The results are shown in Table 2.

(Example 7)

Various operations, measurements, and evaluations were performed in the same way as in Example 1 with the exception that in production of the composition for a functional layer, the amounts of the particulate polymers and the amount of water were changed as indicated in Table 2. The results are shown in Table 2.

(Example 8)

In production of the composition for a functional layer, polyoxyalkylene alkyl ether (NOIGEN® LF-80X (NOIGEN is a registered trademark in Japan, other countries, or both)) as a non-ionic surfactant A was used in an amount such as to be 0.03 mass% instead of the non-ionic surfactant B, and the amount of water was changed as indicated in Table 2. With the exception of these points, various operations, measurements, and evaluations were performed in the same way as in Example 1. The results are shown in Table 2.

(Example 9)

Various operations, measurements, and evaluations were performed in the same way as in Example 8 with the exception that in production of the secondary battery, the used separator was changed to a ceramic-coated separator (surface roughness Sa: 0.2 μm) that was produced in the same way as in Example 2. The results are shown in Table 2.

(Example 10)

Various operations, measurements, and evaluations were performed in the same way as in Example 8 with the exception that in production of the secondary battery, the used separator was changed to a ceramic-coated separator (surface roughness Sa: 0.4 μm) that was produced in the same way as in Example 3. The results are shown in Table 2.

(Example 11)

A composition for adhesion and a secondary battery were produced in the same way as in Example 8 with the exception that in production of the secondary battery, a laminate produced as described below was used as a laminate. Moreover, various measurements and evaluations were performed in the same way as in Example 8. The results are shown in Table 2.

<Production of laminate>

A laminate was obtained by performing operations in the same way as in Example 8 with the exception that in production of the laminate, a positive electrode web (surface roughness Sa: 0.2 μm) produced in the same way as in Example 8 was used as the web 20A illustrated in FIG. 1, a separator web that was the same as that used in Example 1 was used as the web 10A and the web 30A illustrated in FIG. 1, and a negative electrode cut out from a negative electrode web produced in the same way as in Example 8 was used as the substrate 40 illustrated in FIG. 1.

(Example 12)

A composition for adhesion and a secondary battery were produced in the same way as in Example 8 with the exception that in production of the secondary battery, a laminate produced as described below was used as a laminate. Moreover, various measurements and evaluations were performed in the same way as in Example 8. The results are shown in Table 2.

<Production of laminate>

A laminate was obtained by performing operations in the same way as in Example 8 with the exception that in production of the laminate, a negative electrode web (surface roughness Sa: 1.9 μm) produced in the same way as in Example 8 was used as the web 20A illustrated in FIG. 1, a separator web that was the same as that used in Example 8 was used as the web 10A and the web 30A illustrated in FIG. 1, and a positive electrode cut out from a positive electrode web produced in the same way as in Example 8 was used as the substrate 40 illustrated in FIG. 1.

(Example 13)

Various operations, measurements, and evaluations were performed in the same way as in Example 8 with the exception that in production of the composition for a functional layer, the amount of the non-ionic surfactant A and the amount of water were changed as indicated in Table 2. The results are shown in Table 2.

(Example 14)

Various operations, measurements, and evaluations were performed in the same way as in Example 8 with the exception that in production of the composition for a functional layer, the amounts of the particulate polymers and the amount of water were changed as indicated in Table 2. The results are shown in Table 2.

(Examples 15 to 19)

In production of the composition for a functional layer, the water dispersion of the particulate polymer 1 obtained in Production Example 1 and the water dispersion of the particulate polymer 2 obtained in Production Example 2 were mixed such that a mass ratio of the amounts of solid content was 100:10, and then deionized water was further added to perform dilution to a solid content concentration of 10.5%. An ethylene oxide-propylene oxide copolymer (NOPTECHS® ED052) as a non-ionic surfactant B, a water-soluble acrylic acid-based dispersant (ARON® A-6114), propylene glycol as an antidesiccant, and an ammonium salt of polyacrylic acid (weight-average molecular weight: 100,000) as a viscosity modifier were added to the resultant mixture in mass proportions indicated in Table 3, and the solid content concentration was adjusted to 10% to yield a composition for a functional layer as a composition for an adhesive layer. With the exception of these points, various operations, measurements, and evaluations were performed in the same way as in Example 1. The results are shown in Table 3.

(Example 20)

Various operations, measurements, and evaluations were performed in the same way as in Example 15 with the exception that in production of the composition for a functional layer, the viscosity modifier was changed to polyvinylpyrrolidone (average molecular weight: 100,000). The results are shown in Table 3.

(Example 21)

Various operations, measurements, and evaluations were performed in the same way as in Example 15 with the exception that in production of the composition for a functional layer, the viscosity modifier was changed to polyethylene glycol (average molecular weight: 100,000). The results are shown in Table 3.

(Example 22)

Various operations, measurements, and evaluations were performed in the same way as in Example 15 with the exception that in production of the composition for a functional layer, the viscosity modifier was changed to polyvinyl alcohol (average molecular weight: 100,000). The results are shown in Table 3.

(Comparative Example 1)

Various operations, measurements, and evaluations were performed in the same way as in Example 1 with the exception that in production of the composition for a functional layer, a non-ionic surfactant was not compounded, and the amount of water was changed as indicated in Table 2. The results are shown in Table 2.

(Comparative Example 2)

Various operations, etc. were attempted in the same way as in Example 8 with the exception that in production of the composition for a functional layer, the amount of the non-ionic surfactant A and the amount of water were changed as indicated in Table 2. However, inkjet ejection was not possible, secondary battery production steps could not be completed, and, as a consequence, evaluations other than inkjet ejection performance could not be performed.

In Tables 1 to 3:

"2EHA" indicates 2-ethylhexyl acrylate;

"AN" indicates acrylonitrile;
"St" indicates styrene;
"MAA" indicates methacrylic acid;
"AA" indicates acrylic acid;
"AGE" indicates allyl glycidyl ether;
"AMA" indicates allyl methacrylate;
"EDMA" indicates ethylene glycol dimethacrylate;
"BA" indicates butyl acrylate;
"SP" indicates separator (without ceramic coating); and
"CCS" indicates ceramic-coated separator.
Moreover, in Table 3:

"PVP" indicates polyvinylpyrrolidone;
"PEG" indicates polyethylene glycol; and
"PVAL" indicates polyvinyl alcohol.

[Table 1]

| | | | Production Example 1 | Production Example 2 |
|---|---|---|---|---|
| | | | Particulate polymer 1 | Particulate polymer 2 |
| | | 2EHA | 66.6 | 70 |
| | | St | 28.3 | 25 |
| | | MAA | 3 | - |
| | | AA | - | 3 |
| | | AGE | - | 1.7 |
| | | AMA | - | 0.3 |
| | | EDMA | 0.1 | - |
| | Shell portion | St | 1.3 | - |
| | | BA | 0.65 | |
| | | MAA | 0.05 | |
| Mass proportion of shell portion among total of core portion and shell portion (%) | | | 2 | - |
| Glass-transition temperature [°C] | | Core portion | -18 | -25 |
| | | Shell portion | 53 | |
| Volume-average particle diameter D50 [nm] | | | 700 | 200 |
| Degree of swelling [%] | | | 170 | 170 |

[Table 2]

| | | | | Example 1 | Example 2 | Example 3 | Example 4 | Example 5 | Example 6 | Example 7 | Example 8 | Example 9 | Example 10 | Example 11 | Example 12 | Example 13 | Example 14 | Comparative Example 1 | Comparative Example 2 |
|---|---|---|---|---|---|---|---|---|---|---|---|---|---|---|---|---|---|---|---|
| Laminate for non-aqueous secondary battery | Chemical composition of composition for functional layer | | Particulate polymer having core-shell structure | Particulate polymer 1 | | | | | | | | | | | | | | Particulate polymer 1 | |
| | | | Particulate polymer not having core-shell structure | Particulate polymer 2 | | | | | | | | | | | | | | Particulate polymer 2 | |
| | | | Volume-average particle diameter D50 [nm] | 250 | 250 | 250 | 250 | 250 | 250 | 250 | 250 | 250 | 250 | 250 | 250 | 250 | 250 | 250 | 250 |
| | | Chemical composition of slurry | Particulate polymer 1 [mass%] | 9.01 | 9.01 | 9.01 | 9.01 | 9.01 | 9.01 | 4.5 | 9.01 | 9.01 | 9.01 | 9.01 | 9.01 | 9.01 | 4.5 | 9.01 | 9.01 |
| | | | Particulate polymer 2 [mass%] | 0.9 | 0.9 | 0.9 | 0.9 | 0.9 | 0.9 | 0.45 | 0.9 | 0.9 | 0.9 | 0.9 | 0.9 | 0.9 | 0.45 | 0.9 | 0.90 |
| | | | Non-ionic surfactant A [mass%] | - | - | - | - | - | - | - | 0.03 | 0.03 | 0.03 | 0.03 | 0.03 | 0.01 | 0.03 | - | 0.15 |
| | | | Non-ionic surfactant B [mass%] | 0.1 | 0.1 | 0.1 | 0.1 | 0.1 | 0.05 | 0.05 | - | - | - | - | - | - | - | - | - |
| | | | Dispersant [mass%] | 0.09 | 0.09 | 0.09 | 0.09 | 0.09 | 0.09 | 0.05 | 0.09 | 0.09 | 0.09 | 0.09 | 0.09 | 0.09 | 0.05 | 0.09 | 0.09 |
| | | | Type of viscosity modifier [-] | - | - | - | - | - | - | - | - | - | - | - | - | - | - | - | - |
| | | | Amount of viscosity modifier [mass%] | - | - | - | - | - | - | - | - | - | - | - | - | - | - | - | - |
| | | | Antidesiccant [mass%] | 4.5 | 4.5 | 4.5 | 4.5 | 4.5 | 4.5 | 4.5 | 4.5 | 4.5 | 4.5 | 4.5 | 4.5 | 4.5 | 4.5 | 4.5 | 4.50 |

EP 4 645 566 A1

| | Example 1 | Example 2 | Example 3 | Example 4 | Example 5 | Example 6 | Example 7 | Example 8 | Example 9 | Example 10 | Example 11 | Example 12 | Example 13 | Example 14 | Comparative Example 1 | Comparative Example 2 |
|---|---|---|---|---|---|---|---|---|---|---|---|---|---|---|---|---|
| Water [mass%] | 85.4 | 85.4 | 85.4 | 85.4 | 85.4 | 85.45 | 90.5 | 85.47 | 85.47 | 85.47 | 85.47 | 85.47 | 85.49 | 90.5 | 85.5 | 85.35 |
| Solid content concentration [%] | 10 | 10 | 10 | 10 | 10 | 10 | 5.0 | 10 | 10 | 10 | 10 | 10 | 10 | 5.0 | 10 | 10.00 |
| **Physical properties of composition for functional layer** — 30°C surface tension [mN/m] | 40 | 40 | 40 | 40 | 40 | 41 | 42 | 39 | 39 | 39 | 39 | 39 | 43 | 39 | 47 | 28 |
| 50°C surface tension [mN/m] | 37 | 37 | 37 | 37 | 37 | 37 | 38 | 36 | 36 | 36 | 36 | 36 | 39 | 36 | 41 | 25 |
| Surface tension difference [mN/m] | 3 | 3 | 3 | 3 | 3 | 4 | 4 | 3 | 3 | 3 | 3 | 3 | 4 | 3 | 6 | 3 |
| Viscosity [mPas] | 2 | 2 | 2 | 2 | 2 | 2 | 2 | 2 | 2 | 2 | 2 | 2 | 2 | 2 | 2 | 2 |
| **Coating subject** — Type | SP | CCS | CCS | Positive electrode | Negative electrode | SP | SP | SP | CCS | CCS | Positive electrode | Negative electrode | SP | SP | SP | SP |
| Surface roughness (Sa) [μm] | 0.1 | 0.2 | 0.4 | 0.2 | 1.9 | 0.1 | 0.1 | 0.1 | 0.2 | 0.4 | 0.5 | 1.9 | 0.1 | 0.1 | 0.1 | 0.1 |
| **Supply conditions** — Supply technique | Inkjet | | | | | | | | | | | | | | Inkjet | |
| Supply pattern | Dotted | | | | | | | | | | | | | | Dotted | |
| **Functional layer (adhesive layer)** — Area density (dry) [g/m²] | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 | - |

(continued)

| | | Example 1 | Example 2 | Example 3 | Example 4 | Example 5 | Example 6 | Example 7 | Example 8 | Example 9 | Example 10 | Example 11 | Example 12 | Example 13 | Example 14 | Comparative Example 1 | Comparative Example 2 |
|---|---|---|---|---|---|---|---|---|---|---|---|---|---|---|---|---|---|
| | Drying temperature [°C] | 50 | 50 | 50 | 50 | 50 | 50 | 50 | 50 | 50 | 50 | 50 | 50 | 50 | 50 | 50 | - |
| | Dot outer diameter [μm] | 130 | 120 | 105 | 120 | 95 | 130 | 130 | 135 | 125 | 105 | 125 | 100 | 130 | 135 | 120 | - |
| | Dot inner diameter [μm] | 65 | 70 | 0 | 75 | 0 | 75 | 85 | 75 | 75 | 0 | 75 | 0 | 85 | 95 | 100 | - |
| | Profile width [μm] | 65 | 50 | 105 | 45 | 95 | 55 | 45 | 60 | 50 | 105 | 50 | 100 | 45 | 40 | 20 | - |
| | Coating section area [μm²] | 9955 | 7461 | 8659 | 6892 | 7088 | 8855 | 7599 | 9896 | 7854 | 8659 | 7854 | 7854 | 7599 | 7226 | 3456 | - |
| Coating liquid penetration rate [nL/s] | | 0 | 0.1 | 0.2 | 0.1 | 0.4 | 0 | 1 | 0 | 0.1 | 0.2 | 0.1 | 0.4 | 0 | 1 | 2 | - |
| Evaluation | Inkjet ejection characteristics | A | A | A | A | A | A | A | A | A | A | A | A | A | A | A | B |
| | Adhesiveness of functional layer | A | B | A | B | B | A | B | A | B | A | B | B | B | B | A | - |
| | Lithium deposition on electrode surface | A | A | A | B | B | A | A | A | A | A | A | A | A | B | D | - |
| | Output characteristics | A | A | A | B | B | A | A | A | A | A | A | A | A | A | B | - |
| | Increased resistance in cycling test | A | B | A | B | B | A | B | A | B | A | B | B | B | B | D | - |

[Table 3]

| | | | | Example 15 | Example 16 | Example 17 | Example 18 | Example 19 | Example 20 | Example 21 | Example 22 |
|---|---|---|---|---|---|---|---|---|---|---|---|
| Laminate for non-aqueous secondary battery | Chemical composition of composition for functional layer | | Particulate polymer having core-shell structure | Particulate polymer 1 | | | | | | | |
| | | | Particulate polymer not having core-shell structure | Particulate polymer 2 | | | | | | | |
| | | | Volume-average particle diameter D50 [nm] | 250 | 250 | 250 | 250 | 250 | 250 | 250 | 250 |
| | | Chemical composition of slurry | Particulate polymer 1 [mass%] | 9.01 | 9.01 | 9.01 | 9.01 | 9.01 | 9.01 | 9.01 | 9.01 |
| | | | Particulate polymer 2 [mass%] | 0.9 | 0.9 | 0.9 | 0.9 | 0.9 | 0.9 | 0.9 | 0.9 |
| | | | Non-ionic surfactant A [mass%] | - | - | - | - | - | - | - | - |
| | | | Non-ionic surfactant B [mass%] | 0.1 | 0.1 | 0.1 | 0.1 | 0.1 | 0.1 | 0.1 | 0.1 |
| | | | Dispersant [mass%] | 0.09 | 0.09 | 0.09 | 0.09 | 0.09 | 0.09 | 0.09 | 0.09 |
| | | | Type of viscosity modifier [-] | Polya crylic acid ammonium salt | | | | | PVP | PEG | PVAL |
| | | | Amount of viscosity modifier [mass%] | 0.6 | 0.5 | 0.3 | 0.3 | 0.2 | 0.3 | 0.3 | 0.3 |
| | | | Antidesiccant [mass%] | 4.5 | 4.5 | 4.5 | 4.5 | 4.5 | 4.5 | 4.5 | 4.5 |
| | | | Water [mass%] | 85.4 | 85.4 | 85.4 | 85.4 | 85.4 | 85.4 | 85.4 | 85.4 |
| | | | Solid content concentration [%] | 10 | 10 | 10 | 10 | 10 | 10 | 10 | 10 |
| | Physical properties of composition for functional layer | | 30°C surface tension [mN/m] | 40 | 40 | 40 | 40 | 40 | 40 | 40 | 40 |
| | | | 50°C surface tension [mN/m] | 37 | 37 | 37 | 37 | 37 | 37 | 37 | 37 |
| | | | Surface tension difference [mN/m] | 3 | 3 | 3 | 3 | 3 | 3 | 3 | 3 |
| | | | Viscosity [mPas] | 25 | 17 | 10 | 10 | 8 | 10 | 10 | 10 |
| | Coating subject | | Type | Negative electrode | Negative electrode | Negative electrode | CCS | Negative electrode | Negative electrode | Negative electrode | Negative electrode |

(continued)

| | | | Example 15 | Example 16 | Example 17 | Example 18 | Example 19 | Example 20 | Example 21 | Example 22 |
|---|---|---|---|---|---|---|---|---|---|---|
| | | Surface roughness (Sa) [$\mu$m] | 1.9 | 1.9 | 1.9 | 0.2 | 1.9 | 1.9 | 1.9 | 1.9 |
| | Supply conditions | Supply technique | Inkjet | | | | | | | |
| | | Supply pattern | Dotted | | | | | | | |
| | Functional layer (adhesive layer) | Area density (drv) [g/m$^2$] | 0.1 | 0.1 | 0.1 | 0.1 | 0.1 | 0.1 | 0.1 | 0.1 |
| | | Drying temperature [°C] | 50 | 50 | 50 | 50 | 50 | 50 | 50 | 50 |
| | | Dot outer diameter [$\mu$m] | 125 | 123 | 120 | 130 | 115 | 120 | 120 | 120 |
| | | Dot inner diameter [$\mu$m] | 0 | 0 | 0 | 0 | 10 | 0 | 0 | 0 |
| | | Profile width [$\mu$m] | 65 | 65 | 65 | 65 | 65 | 65 | 65 | 65 |
| | | Coating section area [$\mu$m$^2$] | 12272 | 11882 | 11310 | 13273 | 10308 | 11310 | 11310 | 11310 |
| | Coating liquid penetration rate [nL/s] | | 0.1 | 0.2 | 0.2 | 0 | 0.2 | 0.2 | 0.2 | 0.2 |
| Evaluation | Inkjet ejection characteristics | | A | A | A | A | A | A | A | A |
| | Adhesiveness of functional layer | | A++ | A++ | A++ | A++ | A+ | A++ | A++ | A++ |
| | Lithium deposition on electrode surface | | B | A | A | A | A | A | A | A |
| | Output characteristics | | A | A | A | A | A | A | A | A |
| | Increased resistance in cycling test | | B | B | A | A | A | A | A | A |

It can be seen from the results shown in Tables 2 and 3 that through a composition for a non-aqueous secondary battery functional layer having a surface tension $S^{30}$ at 30°C and a surface tension $S^{50}$ at 50°C that satisfy condition (1) $(S^{30} - S^{50})$ < 5 mN/m and condition (2) 30 mN/m ≤ $S^{30}$ ≤ 50 mN/m and also having a viscosity at 30°C of not less than 1 mPa·s and not more than 50 mPa·s, it is possible to ensure inkjet ejection characteristics while also providing a functional layer for a non-aqueous secondary battery having excellent adhesiveness and causing a non-aqueous secondary battery to display excellent battery characteristics.

Moreover, it can be seen from the results shown in Table 3 that when the viscosity at 30°C was within a specific range, it was possible to increase adhesiveness of an obtained functional layer and also to inhibit lithium deposition on an electrode surface during use of an obtained non-aqueous secondary battery and suppress increased resistance upon repeated use of the non-aqueous secondary battery.

INDUSTRIAL APPLICABILITY

According to the present disclosure, it is possible to provide a composition for a non-aqueous secondary battery functional layer that can ensure inkjet ejection characteristics while also providing a functional layer for a non-aqueous secondary battery having excellent adhesiveness and causing a non-aqueous secondary battery to display excellent battery characteristics.

Moreover, according to the present disclosure, it is possible to provide a member for a non-aqueous secondary battery that has excellent adhesiveness and can cause a non-aqueous secondary battery to display excellent electrical characteristics, and also to provide a method of producing this member for a non-aqueous secondary battery.

Furthermore, according to the present disclosure, it is possible to provide a non-aqueous secondary battery that has excellent electrical characteristics.

REFERENCE SIGNS LIST

10A      positive electrode web
20A      separator web
30A      negative electrode web
40       separator
51-54    coating machine (nozzle head)
61, 62   pressure bonding roller
70       cutting machine
91       conveying roller
92       heating roller

**Claims**

1. A composition for a non-aqueous secondary battery functional layer having a surface tension $S^{30}$ at 30°C and a surface tension $S^{50}$ at 50°C that satisfy conditions (1) and (2) set forth below:

$$(S^{30} - S^{50}) < 5 \text{ mN/m} \cdots (1)$$

$$30 \text{ mN/m} \leq S^{30} \leq 50 \text{ mN/m} \cdots (2)$$

and having a viscosity at 30°C of not less than 1 mPa·s and not more than 50 mPa·s.

2. The composition for a non-aqueous secondary battery functional layer according to claim 1, having a viscosity at 30°C of not less than 5 mPa·s and not more than 30 mPa·s.

3. The composition for a non-aqueous secondary battery functional layer according to claim 1, comprising a non-ionic surfactant.

4. The composition for a non-aqueous secondary battery functional layer according to claim 1, comprising a viscosity modifier.

5. The composition for a non-aqueous secondary battery functional layer according to claim 1, comprising a particulate polymer having a core-shell structure as adhesive particles.

6. The composition for a non-aqueous secondary battery functional layer according to claim 5, wherein the particulate polymer having a core-shell structure as the adhesive particles has at least one glass-transition temperature that is lower than 80°C.

7. The composition for a non-aqueous secondary battery functional layer according to claim 5, wherein the particulate polymer having a core-shell structure as the adhesive particles has a volume-average particle diameter of not less than 100 nm and not more than 1,000 nm.

8. A method of producing a member for a non-aqueous secondary battery comprising ejecting the composition for a functional layer according to any one of claims 1 to 7 onto a substrate by an inkjet method to form a coating layer, wherein

the substrate is an electrode or a separator.

9. A member for a non-aqueous secondary battery in which a functional layer that is formed from the composition for a functional layer according to any one of claims 1 to 7 is disposed on a substrate, wherein

the functional layer has a dotted pattern with a dot size of not less than 10 $\mu$m and not more than 1,000 $\mu$m, and
the substrate is an electrode or a separator.

10. A member for a non-aqueous secondary battery in which a functional layer that is formed from the composition for a functional layer according to any one of claims 1 to 7 is disposed on a substrate, wherein

the substrate is an electrode or a separator, and
a penetration rate of the composition for a functional layer in a situation in which the composition for a functional layer is applied onto the substrate by an inkjet method is 0.4 nL/s or less.

11. A non-aqueous secondary battery comprising the member for a non-aqueous secondary battery according to claim 9.

FIG. 1

## INTERNATIONAL SEARCH REPORT

International application No.

**PCT/JP2023/032014**

### A. CLASSIFICATION OF SUBJECT MATTER

*H01M 50/403*(2021.01)i; *H01M 4/13*(2010.01)i; *H01M 4/139*(2010.01)i; *H01M 50/411*(2021.01)i; *H01M 50/414*(2021.01)i; *H01M 50/443*(2021.01)i; *H01M 50/449*(2021.01)i; *H01M 50/463*(2021.01)i; *H01M 50/489*(2021.01)i

FI: H01M50/403 D; H01M4/13; H01M4/139; H01M50/411; H01M50/414; H01M50/443 B; H01M50/443 E; H01M50/449; H01M50/463 A; H01M50/489

According to International Patent Classification (IPC) or to both national classification and IPC

### B. FIELDS SEARCHED

Minimum documentation searched (classification system followed by classification symbols)

H01M50/40-497; H01M4/00-62

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2022/230621 A1 (ZEON CORP) 03 November 2022 (2022-11-03)<br>examples | 1-11 |
| A | WO 2022/209997 A1 (ZEON CORP) 06 October 2022 (2022-10-06)<br>examples | 1-11 |
| A | JP 2020-119888 A (RICOH CO LTD) 06 August 2020 (2020-08-06)<br>claims | 1-11 |
| A | JP 2013-194153 A (SUMITOMO CHEMICAL CO LTD) 30 September 2013 (2013-09-30)<br>claims | 1-11 |
| A | JP 2020-113532 A (RICOH CO LTD) 27 July 2020 (2020-07-27)<br>claims | 1-11 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **19 October 2023** | **07 November 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/032014**

| Patent document cited in search report | | | Publication date (day/month/year) | Patent family member(s) | | | Publication date (day/month/year) |
|---|---|---|---|---|---|---|---|
| WO | 2022/230621 | A1 | 03 November 2022 | (Family: none) | | | |
| WO | 2022/209997 | A1 | 06 October 2022 | (Family: none) | | | |
| JP | 2020-119888 | A | 06 August 2020 | US claims | 2022/0013865 | A1 | |
| | | | | EP | 3918650 | A1 | |
| | | | | CN | 113348588 | A | |
| JP | 2013-194153 | A | 30 September 2013 | (Family: none) | | | |
| JP | 2020-113532 | A | 27 July 2020 | US claims | 2020/0220160 | A1 | |
| | | | | CN | 111416104 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022209997 A1
- WO 2019221056 A1
- JP 2005005012 A
- WO 2019065416 A1
- JP 2013145763 A
- WO 2022230711 A1